(19) Europäisches Patentamt / European Patent Office / Office européen des brevets

(11) EP 4 446 349 A1

(12) EUROPEAN PATENT APPLICATION
published in accordance with Art. 153(4) EPC

(43) Date of publication:
**16.10.2024 Bulletin 2024/42**

(21) Application number: **23767110.2**

(22) Date of filing: **07.03.2023**

(51) International Patent Classification (IPC):
***C08F 210/16*** *(2006.01)* ***C08F 210/14*** *(2006.01)*
***C08F 4/659*** *(2006.01)* ***C08F 4/6592*** *(2006.01)*
***C08L 23/08*** *(2006.01)*

(52) Cooperative Patent Classification (CPC):
**C08F 4/659; C08F 4/6592; C08F 210/14; C08F 210/16; C08L 23/08**

(86) International application number:
**PCT/KR2023/003056**

(87) International publication number:
**WO 2023/172009 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2022 KR 20220030266**
**03.03.2023 KR 20230028702**

(71) Applicant: **LG Chem, Ltd.**
**Yeongdeungpo-gu**
**Seoul 07336 (KR)**

(72) Inventors:
- **KIM, Joongsoo**
**Daejeon 34122 (KR)**
- **SUNG, Yutaek**
**Daejeon 34122 (KR)**
- **SUNG, Ka Ram**
**Daejeon 34122 (KR)**
- **LEE, Jinyoung**
**Daejeon 34122 (KR)**
- **LEE, Hyojoon**
**Daejeon 34122 (KR)**
- **KIM, Yeonsoo**
**Daejeon 34122 (KR)**
- **JEONG, So Dam**
**Daejeon 34122 (KR)**
- **JEON, Min Hong**
**Daejeon 34122 (KR)**

(74) Representative: **Hoffmann Eitle**
**Patent- und Rechtsanwälte PartmbB**
**Arabellastraße 30**
**81925 München (DE)**

(54) **ETHYLENE/1-HEXENE COPOLYMER HAVING IMPROVED LONG-TERM PHYSICAL PROPERTY STABILITY AND PROCESSABILITY**

(57) The present disclosure relates to an ethylene/1-hexene copolymer having excellent long-term stability and processability as well as pipe resistance to internal pressure, and the ethylene/1-hexene copolymer is useful for manufacturing high-pressure heating pipes, PE-RT pipes or large-diameter pipes.

【FIG. 1】

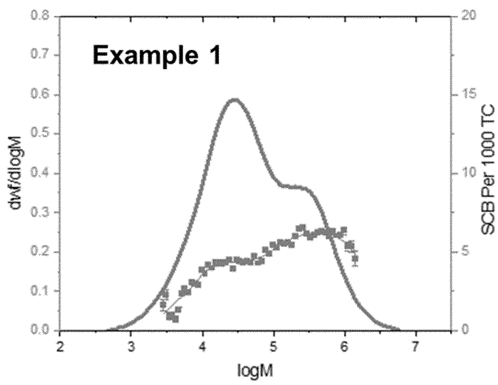


EP 4 446 349 A1

## Description

[TECHNICAL FIELD]

## CROSS-REFERENCE TO RELATED APPLICATION(S)

This application claims the benefit of Korean Patent Applications No. 10-2022-0030266 filed on March 10, 2022, and No. 10-2023-0028702 filed on March 3, 2023 with the Korean Intellectual Property Office, the disclosures of which are incorporated herein by reference in their entirety.
The present disclosure relates to an ethylene/1-hexene copolymer having excellent long-term stability and processability as well as pipe resistance to internal pressure.

[BACKGROUND OF ART]

Polyolefin resins used for high-pressure heating pipes or PE-RT pipes generally require high resistance to internal pressure and excellent processability. The high resistance to internal pressure is a physical property that can be generally expressed in a high-density region, and this is because the modulus increases as the crystallinity in the polyolefin resin increases, thereby increasing the strength to withstand high pressure.
However, pipes have to assure a long-term pressure resistance stability for at least 50 years. However, there is a disadvantage in that the resistance against the brittle fracture mode is deteriorated and the long-term pressure resistance is deteriorated if the density is high. In addition, when the molecular weight is low or the molecular weight distribution is narrow, the large-diameter pipe is difficult to process due to the occurrence of sagging phenomenon during processing. Consequently, the polyolefin resin having a high molecular weight and a very broad molecular weight distribution should be applied to solve these problems. Especially, if the molecular weight is high, extrusion load is largely generated and pipe appearance is poor, and thus a very wide molecular weight distribution is necessarily required.
In particular, PE-RT (Polyethylene of Raised Temperature resistance) type II shows high resistance to internal pressure, 10 MPa or more of MRS (Minimum Required Strength), at high temperatures without cross-linking. Accordingly, it has been used in various fields for transporting hot water, such as water pipes or hot water pipes. Recently, the maximum diameter, which was 160 mm or less, has been expanded to 500 mm or less, expanding its application range. Large-diameter PE-RT over 200 mm requires a high resin viscosity due to dimensional stability related to prevention of slumping, which is a phenomenon in which thick pipes sag downwards during pipe extrusion. However, the high viscosity increases the processing load and causes a reduction in processing speed, resulting in a decrease in processability.
In addition, these high-density polyethylene pipes are often used at high internal pressures and subjected to external mechanical forces. Although the overall pressure is usually well below the yield stress of the polymer, mechanical failure almost always occurs before the polymer is chemically degraded. It is generally accepted that this is due to the existence of micrometer-sized local heterogeneities in the polyethylene pipes causing a strong localized stress distribution around the flaws that exceeds the yield stress. Such a stress concentration induces the formation and growth of a craze by rupture of the craze fibrils. Thus, this apparent brittle failure mode, so-called slow crack growth (SCG), is observed and limits the lifetime of polyethylene pipes.
Therefore, it is necessary to develop a polyethylene capable of improving the pipe resistance to internal pressure, dimensional stability, long-term stability, and processability in a large-diameter pipe with good balance.

[DETAILED DESCRIPTION OF THE INVENTION]

[Technical Problem]

In order to solve the problems of the prior art, there is provided an ethylene/1-hexene copolymer having excellent long-term stability as well as pipe resistance to internal pressure.
There is also provided a pipe manufactured using the ethylene/1-hexene copolymer.

[Technical Solution]

In order to solve the above problems, there is provided an ethylene/1-hexene copolymer satisfying the following conditions:

a molecular weight distribution (Mw/Mn) is 8 to 12,
a broad orthogonal co-monomer distribution (BOCD) is 1 to 2,
an integral value in a region where Log M is 6 or more in a gel permeation chromatography (GPC) curve graph

having an x-axis of log M and a y-axis of dw/dlogM is 3.0% or more of a total integral value, wherein the log M is a a log value of a weight average molecular weight, and the dwt/dlog M is a molecular weight distribution, and
a tie molecule fraction is 6.0% or more.

According to another embodiment of the present disclosure, there is pvodied a method for preparing the ethylene/1-hexene copolymer, including the step of copolymerizing ethylene and 1-hexene in a mono-modal polymerization process in the presence of a catalyst composition comprising a first metallocene compound represented by Chemical Formula 1 and a second metallocene compound represented by Chemical Formula 2 while introducing hydrogen gas, wherein the first metallocene compound and the second metallocene compound are included in a molar ratio of 1:2 to 1:8:

[Chemical Formula 1] $(Cp^1R^a)_n(Cp^2R^b)M^1Z^1_{3-n}$

in Chemical Formula 1,

$M^1$ is a Group 4 transition metal;
each of $Cp^1$ and $Cp^2$ is cyclopentadienyl unsubstituted or substituted with $C_{1-20}$ hydrocarbon;
$R^a$ and $R^b$ are the same as or different from each other, and are each independently hydrogen, $C_{1-20}$ alkyl, $C_{1-20}$ alkoxy, $C_{2-20}$ alkoxyalkyl, $C_{6-20}$ aryl, $C_{6-20}$ aryloxy, $C_{2-20}$ alkenyl, $C_{7-40}$ alkylaryl, $C_{7-40}$ arylalkyl, $C_{8-40}$ arylalkenyl, $C_{2-20}$ alkynyl, or substituted or unsubstituted $C_{2-20}$ heteroaryl containing at least one heteroatom selected from the group consisting of N, O and S, provided that at least one of $R^a$ and $R^b$ is not hydrogen;
$Z^1$ are each independently halogen, $C_{1-20}$ alkyl, $C_{2-20}$ alkenyl, $C_{7-40}$ alkylaryl, $C_{7-40}$ arylalkyl, $C_{6-20}$ aryl, substituted or unsubstituted $C_{1-20}$ alkylidene, substituted or unsubstituted amino, $C_{2-20}$ alkylalkoxy, or $C_{7-40}$ arylalkoxy; and
n is 1 or 0;

[Chemical Formula 2]

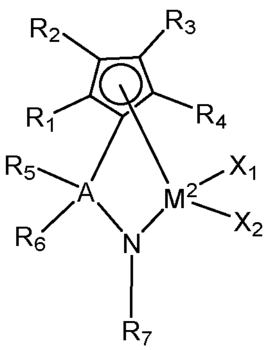

in Chemical Formula 2,

$M^2$ is a Group 4 transition metal;
A is carbon, silicon, or germanium;
$X^1$ and $X^2$ are the same as or different from each other, and are each independently halogen, or $C_{1-20}$ alkyl;
$R_1$ to $R_4$ are the same as or different from each other, and are each independently hydrogen, $C_{1-20}$ alkyl, $C_{2-20}$ alkenyl, $C_{6-20}$ aryl, $C_{7-20}$ alkylaryl, or $C_{7-20}$ arylalkyl, or two or more substituents adjacent to each other of $R_1$ to $R_4$ are connected with each other to form a substituted or unsubstituted aliphatic ring, a substituted or unsubstituted aromatic ring, or a substituted or unsubstituted heteroaromatic ring containing at least one selected from the group consisting of N, O and S;
$R_5$ and $R_6$ are the same as or different from each other, and are each independently $C_{1-20}$ alkyl, $C_{2-20}$ alkenyl, $C_{6-30}$ aryl, or $C_{2-20}$ alkoxyalkyl; and
$R_7$ is $C_{1-20}$ alkyl, $C_{2-20}$ alkenyl, or $C_{6-30}$ aryl.

According to another embodiment of the present disclosure, there is also provided a pipe manufactured using the ethylene/1-hexene copolymer.

[ADVANTAGEOUS EFFECTS]

The ethylene/1-hexene copolymer according to the present disclosure has excellent long-term stability and processability as well as pipe resistance to internal pressure by increasing the middle and high molecular weight regions to increase the tie molecule fraction and the entanglement of polymer chains, and controlling a ratio of high molecular polymer region and low molecular polymer region, and as a result, it can be applied to high-pressure heating pipes, PE-RT pipes or large-diameter pipes.

[BRIEF DESCRIPTION OF THE DRAWINGS]

FIG. 1 shows a GPC curve (solid line) and a SCB content graph (square dotted line) of the ethylene/1-hexene copolymer prepared in Example 1 according to an embodiment of the present disclosure.

FIG. 2 shows a GPC curve (solid line) and a SCB content graph (square dotted line) of the ethylene/1-hexene copolymer prepared in Example 2 according to an embodiment of the present disclosure.

FIG. 3 shows a GPC curve (solid line) and a SCB content graph (square dotted line) of the ethylene/1-hexene copolymer prepared in Example 3 according to an embodiment of the present disclosure.

FIG. 4 shows a GPC curve (solid line) and a SCB content graph (square dotted line) of the ethylene/1-hexene copolymer prepared in Example 4 according to an embodiment of the present disclosure.

FIG. 5 shows a GPC curve (solid line) and a SCB content graph (square dotted line) of the ethylene/1-hexene copolymer according to Comparative Example 1.

FIG. 6 shows a GPC curve (solid line) and a SCB content graph (square dotted line) of the ethylene/1-hexene copolymer according to Comparative Example 2.

FIG. 7 shows a GPC curve (solid line) and a SCB content graph (square dotted line) of the ethylene/1-hexene copolymer according to Comparative Example 3.

FIG. 8 shows a GPC curve (solid line) and a SCB content graph (square dotted line) of the ethylene/1-octene copolymer according to Comparative Example 4.

FIG. 9 shows a GPC curve (solid line) and a SCB content graph (square dotted line) of the ethylene/1-hexene copolymer according to Comparative Example 5.

FIG. 10 shows a GPC curve (solid line) and a SCB content graph (square dotted line) of the ethylene/1-butene copolymer according to Comparative Example 6.

FIG. 11 shows a GPC curve (solid line) and a SCB content graph (square dotted line) of the ethylene/1-hexene copolymer according to Comparative Example 7.

FIG. 12 shows a GPC curve (solid line) and a SCB content graph (square dotted line) of the ethylene/1-hexene copolymer according to Comparative Example 8.

FIG. 13 shows a GPC curve (solid line) and a SCB content graph (square dotted line) of the ethylene/1-hexene copolymer according to Comparative Example 9.

FIG. 14 shows a GPC curve (solid line) and a SCB content graph (square dotted line) of the ethylene/1-hexene copolymer according to Comparative Example 10.

FIG. 15 shows a GPC curve (solid line) and a SCB content graph (square dotted line) of the ethylene/1-hexene copolymer according to Comparative Example 11.

FIG. 16 is a schematic diagram showing an example of an apparatus for measuring sagging times of the ethylene/1-hexene copolymer, ethylene/1-butene copolymer, and ethylene/1-octene copolymer according to Examples and Comparative Examples.

[DETAILED DESCRIPTION OF THE EMBODIMENTS]

In the present disclosure, the terms "the first", "the second", and the like are used to describe a variety of components, and these terms are merely employed to distinguish a certain component from other components.

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "contain" when used in this specification, specify the presence of stated features, numbers, steps, components, or combinations thereof, but do not preclude the presence or addition of one or more other features, numbers, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in detail.

The ethylene/1-hexene copolymer according to an embodiment of the present disclosure satisfies the following conditions: a molecular weight distribution (Mw/Mn) is 8 to 12, a broad orthogonal co-monomer distribution (BOCD) is 1 to 2, an integral value in a region where Log M is 6 or more in a gel permeation chromatography (GPC) curve graph having an x-axis of log M and a y-axis of dw/dlogM is 3.0% or more of a total integral value, wherein the log M is a a log value of a weight average molecular weight, and the dwt/dlog M is a molecular weight distribution, and a tie molecule fraction is 6.0% or more.

In general, high-pressure heating pipes or PE-RT pipes to which a polyolefin resin is applied require excellent processability as well as basic mechanical properties. There is a trade-offthe relationship between sagging time and processability in terms of product structure. The sagging time is the time taken for the resin to descend 1 m using 2L Bloma. A long sagging time is required to increase the diameter of the pipe, but the high molecular weight ratio must be increased to secure a long sagging time, which leads to deterioration in processability. In addition, when the low molecular weight ratio is increased to secure processability, the sagging time is shortened.

In the present disclosure, a hybrid supported metallocene catalyst comprising two metallocene compounds that exhibits low comonomer incorporation in the low molecular weight region and high comonomer incorporation in the high molecular weight region with respect to 1-hexene at an optimized ratio is used to simultaneously control the ratio of low molecular weight polymer and high molecular weight polymer in the polymer. In addition, with a uni-modal polymerization process using a single reactor, physical properties of the ethylene/1-hexene copolymer prepared by the multimodal polymerization process such as the optimized molecular weight distribution are achieved to secure the sagging time and improve processability.

In particular, the present inventors have confirmed that in the case of large-diameter PE-RT, slow crack growth (SCG) can be predicted through NPT to predict durability over 50 years even during pipe processing. For example, a pipe with a diameter of 110 mm is extruded, notches are made in four directions, and then pressure is applied to measure a destruction time as NPT. NPT over 500 hours is suitable for a large-diameter pipe. SCG properties are influenced by many factors such as density, MI, polymer ratio, tie-molecules, and BOCD. The present disclosure optimizes the SCG influencing factors, and thus NPT is about 2000 hours exceeding the existing standard of 500 hour. This makes it possible to manufacture products more suitable for cases requiring SCG improvements.

Accordingly, the ethylene/1-hexene copolymer according to one embodiment of the present disclosure is characterized in that it satisfies all of the molecular weight distribution (Mw/Mn), BOCD (Broad Orthogonal Co-monomer Distribution), high molecular region ratio, and tie molecule fraction within an optimal range.

Specifically, the ethylene/1-hexene copolymer according to one embodiment of the present disclosure has an optimized molecular weight distribution (Mw/Mn, PDI) of 8 to 12, thereby exhibiting excellent properties such as long-term stability and processability along with pipe resistance to internal pressure. More specifically, the ethylene/1-hexene copolymer may have a molecular weight distribution of about 9 or more, about 9.5 or more, about 9.7 or more, about 9.9 or more, about 10 or more, about 10.2 or more, or about 10.5 or more, and about 11.9 or less, about 11.8 or less, about 11.7 or less, about 11.6 or less, or about 11.5 or less. For example, the ethylene/1-hexene copolymer may have a molecular weight distribution of 10 or more to 11.8 or less. The molecular weight distribution of the ethylene/1-hexene copolymer may be within the above-described range in terms of improving long-term stability and processability during pipe processing and securing excellent pressure resistance.

In addition, with the above molecular weight distribution, the ethylene/1-hexene copolymer may have a weight average molecular weight (Mw) of 150000 g/mol or more, 155000 g/mol or more, 160000 g/mol or more, 165000 g/mol or more, 170000 g/mol or more, or 175000 g/mol or more, and 210000 g/mol or less, 205000 g/mol or less, 200000

g/mol or less, 195000 g/mol or less, 190000 g/mol or less, or 189000 g/mol or less. For example, the weight average molecular weight (Mw) of the ethylene/1-hexene copolymer may be 155000 g/mol or more and 190000 g/mol or less.

In general, polymers prepared using metallocene catalysts have a trade-off relationship between processability and mechanical properties depending on the weight average molecular weight. That is, when the weight average molecular weight is increased, the mechanical properties are improved but the processability is decreased. On the other hand, when the weight average molecular weight is decreased, the processability is improved but the mechanical properties are decreased. However, the ethylene-1-hexene copolymer has a weight average molecular weight within the above range, and thus may exhibit improved processability and mechanical properties with a good balance.

Meanwhile, in the present disclosure, the molecular weight distribution may be obtained by measuring the weight average molecular weight (Mw) and the number average molecular weight (Mn) of the ethylene/1-hexene copolymer, and then calculating a ratio of the weight average molecular weight to the number average molecular weight (Mw/Mn). In addition, the weight average molecular weight and the number average molecular weight can be measured using gel permeation chromatography (GPC), and a specific measurement method will be described in more detail in Test Example 1 below.

In particular, the ethylene/1-hexene copolymer of the present disclosure is copolymerized in a single polymerization reactor in a mono-modal polymerization process as described below. In addition, the structure and substituents of the first metallocene compound and the second metallocene compound, which are catalytically active components, are controlled, and the supporting ratio of the first metallocene compound and the second metallocene compound is adjusted within a predetermined range. Accordingly, the ethylene/1-hexene copolymer may have an optimized molecular weight distribution, and may control the ratio of the high molecular weight polymer and the low molecular weight polymer in the molecule and increase the middle and high molecular weight regions in the molecule.

In addition, the ethylene/1-hexene copolymer is characterized in that the molecular weight distribution (Mw/Mn) is optimized as described above, and the middle and high molecular weight regions in the molecule are increased to realize BOCD (Broad Orthogonal Co-monomer Distribution) in an optimum range.

Specifically, the ethylene/1-hexene copolymer has BOCD (Broad Orthogonal Co-monomer Distribution) of 1 to 2.

In the present disclosure, the BOCD structure means a structure in which comonomers such as alpha-olefin (e.g., 1-hexene) are incorporated predominantly in high-molecular-weight main chains, that is, a structure in which the SCB (short chain branch) content increases as the molecular weight increases.

Herein, the short chain branch (SCB) refers to a branch having 2 to 7 carbon atoms.

The weight average molecular weight, molecular weight distribution, and SCB content are measured simultaneously and continuously by GPC-FTIR instrument, and the BOCD may be calculated based on the following Equation 1 through a molecular weight distribution curve obtained by plotting a log value (log M) of a weight average molecular weight (M) on the x-axis, and a molecular weight distribution (dwt/dlog M) with respect to the log value on the y-axis, and then measuring the SCB (short chain branch) content (content of branches having 2 to 7 carbon atoms per 1,000 carbons, unit: branch/1,000C) at the left and right borders of centered 60% area excluding 20% of the left and right ends in the total area. In this regard, the SCB content at high molecular weight side and the SCB content at low molecular weight side mean SCB content values at the left and right borders of centered 60% area excluding 20% of the left and right ends, respectively.

[Equation 1]

$$\mathrm{BOCD} = \frac{(\text{SCB content at high molecular weight side } - \text{SCB content at low molecular weight side})}{(\log M \text{ at high molecular weight side} - \log M \text{ at low molecular weight side})}$$

If the BOCD index is 0 or less, it can be considered that the polymer has no BOCD structure, and if the BOCD index is more than 0, it can be considered that the polymer has the BOCD structure. The larger the value, the higher the SCB (short chain branch) content at high molecular weight side.

As the ethylene/1-hexene copolymer according to an embodiment of the present disclosure has the optimized BOCD of 1 to 2, it has high comonomer content at the high molecular weight side, and as a result, may exhibit excellent pressure resistance and environmental stress cracking resistance. More specifically, the ethylene/1-hexene copolymer may have the BOCD of 1.02 or more, 1.04 or more, 1.06 or more, 1.08 or more, 1.1 or more, 1.15 or more, 1.2 or more, or 1.4 or more, and 1.95 or less, 1.9 or less, 1.85 or less, 1.8 or less, 1.75 or less, 1.7 or less, or 1.65 or less. For example, the BOCD of the ethylene/1-hexene copolymer may be 1.04 or more and 1.8 or less. The BOCD of the ethylene/1-hexene copolymer may be within the above-described range in terms of improving long-term stability and processability

during pipe processing and securing excellent internal pressure.

In addition, the ethylene/1-hexene copolymer has the molecular weight distribution (Mw/Mn) and BOCD (Broad Orthogonal Co-monomer Distribution) in an optimal range as described above while achieving the high middle and high molecular weight regions in the molecular structure, thereby securing excellent pressure resistance while improving long-term stability and processability during pipe processing.

Specifically, the ethylene/1-hexene copolymer has an integral value in the region where log M is 6 or more in a GPC curve graph having an x-axis of log M and a y-axis of dw/dlogM is 3.0% or more, or 3.0% to 3.7% of the total integral value.

Preferably, the integral value in the region where log M is 6 or more may be 3.02% or more, 3.03% or more, 3.05% or more, or 3.07% or more. In addition, the integral value in the region where log M is 6 or more may be 3.65% or less, 3.6% or less, 3.55% or less, 3.5% or less, 3.45% or less, 3.4% or less, 3.35% or less, 3.3% or less, 3.25% or less, or 3.23% or less.

When having the integral value in the region where log M is 6 or more as described above, high medium and high molecular weight regions in the molecular structure of the ethylene/1-hexene copolymer can be realized, and at the same time, excellent pipe resistance to internal pressure can be achieved while improving long-term stability and processability during pipe processing.

In addition, as described above, the ethylene/1-hexene copolymer is characterized in that it satisfies the molecular weight distribution (Mw/Mn), BOCD (Broad Orthogonal Co-monomer Distribution), and high molecular weight region ratio within an optimal range, and increases the middle and high molecular weight regions to increase the tie molecule fraction and the entanglement of polymer chains.

Specifically, the ethylene/1-hexene copolymer has a tie molecule fraction of 6.0% or more, or 6.0% or more to 9.0% or less.

The 'tie molecule' refers to a molecule that connects one lamellar crystal and another lamellar crystal in a polymer molecular structure. More specifically, the ethylene/1-hexene copolymer is a semi-crystalline polymer in the form of a spherulite formed by three-dimensionally gathering a plurality of lamellae, wherein folded polymer chains are bundled to form the lamellae. In addition, the copolymer consists of a crystalline region and an amorphous region. In this case, an inside part of the lamellar crystal corresponds to a crystalline region and an outside part of the lamellar crystal corresponds to an amorphous region. Further, the amorphous region consists of i) cilia where the chain begins at the crystalline region and ends at the amorphous region, ii) a loose loop where the chain links one lamella crystal, and iii) an inter-lamellar link where the chain links two lamella crystals.

Thus, the ethylene/1-hexene copolymer contains tie molecules in the amorphous region, i.e., between one lamellar crystal and the other lamellar crystal to connect them. This is particularly important because the higher the tie molecule fraction, the higher the binding force of the crystalline region, thereby reducing the change in crystal structure and improving physical properties of the entire polymer.

Accordingly, the present disclsoure is characterized by providing an ethylene/1-hexene copolymer in which the molecular weight distribution (Mw/Mn), BOCD (Broad Orthogonal Co-monomer Distribution), and high molecular region ratio are optimized while having an increased tie molecule fraction linking lamellar crystal structures in the polyethylene in terms of improving long-term stability and processability during pipe processing and securing excellent pressure resistance. Specifically, when the tie molecule fraction is increased, the crystalline regions may be well bound, so that even if they have the same molecular weight, physical properties of the ethylene/1-hexene copolymer, in particular, long-term stability and processability along with pipe resistance to internal pressure can be improved.

For this reason, the ethylene/1-hexene copolymer according to the present disclosure has a tie molecule fraction of 6.0% or more. When the ethylene/1-hexene copolymer has the tie molecule fraction of less than 6.0%, SCG properties may be deteriorated. Specifically, the tie molecule fraction may be 6.02% or more, 6.05% or more, 6.08% or more, 6.1% or more, or 6.12% or more. However, in terms of improving both long-term stability and processability along with pipe resistance to internal pressure, the ethylene/1-hexene copolymer may have the tie molecule fraction of 8.5% or less, 8.0% or less, 7.5% or less, 7.2% or less, 7.0% or less, 6.8% or less, 6.6% or less, 6.5% or less, 6.4% or less, or 6.3% or less. For example, when the tie molecule fraction exceeds 9.0%, the binding force of the crystalline region is increased, but the sagging property by the polymer may be deteriorated due to the decrease in the ultra-high molecular weight polymer.

At this time, the tie molecule fraction of the ethylene/1-hexene copolymer can be measured through a tie molecule fraction distribution graph having an x-axis of log M and a y-axis of nPdM.

The tie molecule fraction distribution graph can be obtained from the data of a GPC curve graph having an x-axis of log M and a y-axis of dw/dlogM and DSC measurement results. In the above, M refers to the average molecular weight, and w refers to the weight fraction. Specifically, the log Mw of the x-axis in the tie molecule fraction distribution graph is the same as the x-axis of the GPC curve graph. In addition, nPdM of the y-axis in the tie molecule fraction distribution graph can be calculated from data obtained from the GPC curve graph. In the nPdM, n is the number of polymers having a molecular weight of M, which can be obtained as (dw/dlog M)/M from the GPC curve data. P is the

probability that a tie molecule is generated and can be calculated from Equation 2 below, and dM is dlogM<x-axis data of GPC curve, X n+1> - dlogM<x-axis data of GPC curve, Xn>.

[Equation 2]

$$P=\frac{1}{3}\frac{\int_{2l_c+l_a}^{\infty} r^2 \exp\left(-b^2 r^2\right) dr}{\int_{0}^{\infty} r^2 \exp\left(-b^2 r^2\right) dr}$$

in Equation 2,

r is an end-to-end distance of a random coil,
$b^2$ is $3/2<r>^2$,
$l_c$ is a crystal thickness, and
$l_a$ is an amorphous layer thickness.

In Equation 2, $l_c$ can be calculated from Equation 3 below, wherein Tm is the melting temperature of polyethylene.

[Equation 3]

$$T_m = T^{\circ}_m\left(1-\frac{2\sigma_e}{\Delta h_m l_c}\right)$$

in Equation 3,
$T_m^0$ is 415K, $\sigma_e$ is $60.9\times10^{-3}Jm^{-2}$, and $\Delta h_m$ is $2.88\times10^{3}Jm^{-3}$.

Further, in Equation 2, $l_a$ can be calculated from Equation 4 below.

[Equation 4]

$$l_a = \rho_c l_c(1-\omega^c)/\rho_a\omega^c$$

in Equation 4,

$\rho_c$ is a density of a crystalline phase and is 1000 $kg/m^3$,
$\rho_a$ is a density of an amorphous phase and is 852 $kg/m^3$, and
$\omega^c$ is a weight fraction crystallinity and can be measured with DSC.

The tie molecule fraction ($\overline{P}$) can be derived from the following Equation 5 with the value of P obtained from the Equation 2.

[Equation 5]

$$\overline{P} = \frac{\int_0^{\infty} nPdM}{\int_0^{\infty} ndM}$$

in Equation 5,

nPdM is as described above in relation to Equation 2, and
P is the value obtained in the Equation 2.

Meanwhile, the ethylene/1-hexene copolymer may have a melting temperature (Tm) of about 130 °C or higher, or about 130 °C to about 133 °C. Specifically, the melting temperature (Tm) of the ethylene/1-hexene copolymer may be about 130.5 °C or more, about 130.8 °C or more, about 131 °C or more, about 131.2 °C or more, about 131.4 °C or more, or about 131.5 °C or more. However, in terms of improving processability along with excellent pressure resistance properties during pipe processing, the melting temperature (Tm) of the ethylene/1-hexene copolymer may be about 133 °C or less, about 132.8 °C or less, about 132.6 °C or less, or about 132.5 °C or less. This melting temperature range means that the temperature at which the crystal structure of the ethylene/1-hexene copolymer starts to disappear is high, indicating improved long-term stability together with pipe resistance to internal pressure. When the melting temperature (Tm) of the ethylene/1-hexene copolymer is 133 °C or more, high pressure resistance is exhibited, but SCG characteristics are inferior. On the other hand, when Tm is 131 °C or less, SCG characteristics are good, but the resistance to internal pressure is low, less than 10 MPa, and thus the copolymer is not suitable for large-diameter products.

In the present disclosure, the melting temperature (Tm) can be measured using a differential scanning calorimeter (DSC, device name: Q20, manufacturer: TA Instruments). Specifically, the temperature of the ethylene/1-hexene copolymer is increased to 190 °C, and maintained at that temperature for 5 minutes. After that, the temperature is lowered to 50 °C, and further increased. The temperature at the top of the DSC (Differential Scanning Calorimeter, manufactured by TA) curve is referred to as the melting point (Tm). Herein, the temperature is increased and lowered at a rate of 10 °C/min, respectively, and the melting point (Tm) is confirmed at the second heating period.

In addition, the ethylene/1-hexene copolymer has a density of 0.945 g/cm$^3$ to 0.955 g/cm$^3$ as measured according to ASTM D 1505. In particular, when the density is less than 0.945 g/cm$^3$, there is a risk of deterioration in pressure resistance, and when the density exceeds 0.955 g/cm$^3$, there is a risk of deterioration in long-term stability. When having a density within the above-mentioned range, it is possible to improve long-term stability without worrying about deterioration in pressure resistance or occurrence of problems. Specifically, the density of the ethylene/1-hexene copolymer may be 0.945 g/cm$^3$ or more, or 0.946 g/cm$^3$ or more, and 0.955 g/cm$^3$ or less, or 0.950 g/cm$^3$ or less. For example, the density of the ethylene/1-hexene copolymer may be 0.9469 g/cm$^3$ to 0.9472 g/cm$^3$. In particular, the density of the ethylene/1-hexene copolymer may be within the above-described range in terms of improving long-term stability during pipe processing and securing excellent pressure resistance.

In addition, the ethylene/1-hexene copolymer has a melt index ($MI_{2.16}$) of 0.05 g/10min to 0.25 g/10min when measured at 190 °C under a load of 2.16 kg according to ASTM D 1238. When the melt index is less than 0.05 g/10min, there is a risk of deterioration in processability, and when the melt index exceeds 0.25 g/10min, there is a risk of deterioration in long-term stability. In the present disclosure, when having the melt index within the above range, it is possible to improve processability without deterioration in long-term stability. More specifically, the melt index ($MI_{2.16}$) of the ethylene/1-hexene copolymer may be 0.08 g/10min or more, 0.10 g/10min or more, or 0.12 g/10min or more, and 0.22 g/10min or less, 0.20 g/10min or less, or 0.18 g/10 min or less.

In addition, the ethylene/1-hexene copolymer has a high load melt index (HLMI, $MI_{21.6}$) of 10 g/10min to 18 g/10min when measured at 190 °C under a load of 21.6 kg according to ASTM D 1238. The high load melt index indicates processability, and when the high load melt index is less than 10 g/10min, there is a risk of deterioration in (processability) effect. When it exceeds 18 g/10min, excellent processability is exhibited, but there is a risk of deterioration in long-term stability. In the present disclosure, when having the high load melt index within the above range, it is possible to exhibit an effect of improving processability without concern for deterioration in long-term stability. More specifically, the high load melt index of the ethylene/1-hexene copolymer may be 12 g/10 min or more, 13 g/10 min or more, or 14 g/10 min or more, and 17.5 g/10 min or less, 17 g/10 min or less, or 16.5 g/10 min or less, 16 g/10 min or less, or 15.5 g/10 min or less.

In addition, the ethylene/1-hexene copolymer may have a melt flow rate ratio ($MI_{21.6}/MI_{2.16}$) of 85 to 120, when

measured at 190 °C according to ASTM D 1238. As the copolymer has the melt flow rate ratio within the above range, flowability at each load is appropriately controlled, so that processability and mechanical properties can be improved at the same time. More preferably, the melt flow rate ratio may be 86 or more, 88 or more, or 90 or more, and 115 or less, 110 or less, 105 or less, 100 or less, 95 or less, or 93 or less. For example, the melt flow rate ratio may be 88 to 93.

In addition, the ethylene/1-hexene copolymer may have a characteristic stress (C.S.) of 13 MPa to 14.5 Mpa, specifically 13.2 MPa or more, 13.4 MPa or more, 13.5 MPa or more, or 13.6 MPa or more, and 14.4 MPa or less, 14.3 MPa or less, 14.2 MPa or less, 14.0 MPa or less, or 13.9 MPa or less. For example, the characteristic stress of the ethylene/1-hexene copolymer may be 13.5 MPa to 14.0 MPa or less. The characteristic stress of the ethylene/1-hexene copolymer may be within the above-described range in terms of improving long-term stability and processability during pipe processing and securing excellent pressure resistance.

For example, the characteristic stress (C.S.) of the ethylene/1-hexene copolymer may be measured by a tensile test of stress-strain in accordance with ASTM D 638, and a specific measurement method will be described in more detail in Test Example 1 below.

In addition, the ethylene/1-hexene copolymer may have a sagging time of 100 seconds to 110 seconds, specifically 101 seconds or more, 102 seconds or more, 103 seconds or more, 104 seconds or more, 105 seconds or more, or 106 seconds or more, and 109 seconds or less, 108 seconds or less, or 107 seconds or less. The sagging time of the ethylene/1-hexene copolymer may be within the above-described range in terms of improving long-term stability and processability during pipe processing and securing excellent pressure resistance.

For example, the sagging time of the ethylene/1-hexene copolymer is obtained by melting the ethylene/1-hexene copolymer in an extruder, flowing the molten ethylene/1-hexene copolymer from top to bottom in a direction parallel to gravity, and then measuring the time taken for the ethylene/1-hexene copolymer to descend 1 m from top to bottom in seconds in the Parison installed in a direction parallel to gravity as the sagging time. For example, as a device for measuring the sagging time, an injection device equipped with an air hose for injecting air so that the molten ethylene/1-hexene copolymer generated in the extruder can flow may be used together with the extruder and the Parison. In addition, the injection device allows the molten ethylene/1-hexene copolymer to flow from top to bottom in a direction parallel to gravity in the extruder, and equipped with a Parison that allows the molten ethylene/1-hexene copolymer to flow from top to bottom in a direction parallel to gravity. For example, the injection device may be equipped with an air hose, a die head, a molten pastic, an extruder, a blow pin, a cooling line, a mold cavity, a parison, or a mold half.

One example of such an injection device is 2L Bloma (Blow Molders Accumulator, manufacturer BLOMA ENGINEERING CO., device name: 2L Blow Molding M/C, die head), wherein 2L means a container volume that can be manufactured by blow molding. As a specific example, the injection device is operated at the extruder temperature of 180 °C to 230 °C, 200 °C to 220 °C, or 205 °C to 215°C. For example, it may be operated under the conditions of 210 °C, screw PRM 12, die size 45 mm, and thickness 1.8 mm, and the time taken for the molten ethylene/1-hexene copolymer to descend 1 m from top to bottom is measured in seconds as the sagging time. A specific measurement method will be described in more detail in Test Example 1 below.

In addition, the ethylene/1-hexene copolymer may have resistance to internal pressure of 10 MPa to 12 Mpa, specifically 10.01 MPa or more, and 11.5 MPa or less, 11 MPa or less, or 10.5 MPa or less, when measured in accordance with ISO 9080. The resistance to internal pressure of the ethylene/1-hexene copolymer may be within the above-mentioned range in terms of improving long-term stability and processability during pipe processing and securing excellent pressure resistance.

In addition, the ethylene/1-hexene copolymer may have a strain hardening modulus (a slope of a linear fitting value between the true strain 8 and 12 in the Hookean constitutive model curve after measuring a strain/stress curve under the conditions of 80 °C and 20 mm/min in accordance with ISO 18488 to obtain a Neo-Hookean constitutive model curve (x-axis: $\lambda^2 - \frac{1}{\lambda}$, y-axis: $\sigma_{true}$), <Gp>) of 23 MPa to 25 MPa, specifically 23.1 MPa or more, or 23.2 MPa or more, and 24.5 MPa or less, or 24 MPa or less. The strain hardening modulus (a slope of a linear fitting value between the true strain 8 and 12 in the Hookean constitutive model curve after measuring a strain/stress curve under the conditions of 80 °C and 20 mm/min in accordance with ISO 18488 to obtain a Neo-Hookean constitutive model curve (x-axis: $\lambda^2 - \frac{1}{\lambda}$, y-axis: $\sigma_{true}$, <Gp>)) of the ethylene/1-hexene copolymer may be within the above-described range in terms of improving long-term stability and processability during pipe processing and securing excellent pressure resistance.

In addition, the ethylene/1-hexene copolymer may have a notch pipe test (NPT) result measured according to ISO 13479 of 1500 hours to 4000 hours. Specifically, the notch pipe test result may be 1550 hours or more, 1600 hours or more, 1650 hours or more, 1700 hours or more, 1750 hours or more, 1800 hours or more, 1850 hours or more, 1900 hours or more, or 1940 hours or more, and 3900 hours or less, 3800 hours or less, 3700 hours or less, 3600 hours or less, 3500 hours or less, 3200 hours or less, 3000 hours or less, 2800 hours or less, or 2600 hours or less. The notch pipe test (NPT) result of the ethylene/1-hexene copolymer may be within the above-described range in terms of improving

long-term stability and processability during pipe processing and securing excellent pressure resistance.

For example, the notch pipe test (NPT) result of the ethylene/1-hexene copolymer may be measured according to ISO 13479, and a specific measurement method will be described in more detail in Test Example 1 below.

In addition, the 1-hexene content in the ethylene/1-hexene copolymer may be 3.0 wt% to 7.0 wt% based on a total weight of the copolymer. More specifically, the ethylene/1-hexene copolymer may have the content of 1-hexene comonomer of about 3.1 wt% or more, about 3.2 wt% or more, about 3.3 wt% or more, about 3.4 wt% or more, or about 3.5 wt% or more, and about 6.9 wt% or less, about 6.8 wt% or less, about 6.7 wt% or less, about 6.6 wt% or less, or about 6.5 wt% or less based on the total weight of the copolymer.

Meanwhile, the ethylene/1-hexene copolymer having the above-described physical properties may be prepared by a method including the step of copolymerizing ethylene and 1-hexene in a mono-modal polymerization process in the presence of a catalyst composition comprising a first metallocene compound represented by Chemical Formula 1 and a second metallocene compound represented by Chemical Formula 2 while introducing hydrogen gas.

Accordingly, in another embodiment of the present disclosure, there is provided a method for preparing the ethylene/1-hexene copolymer:

[Chemical Formula 1] $(Cp^1R^a)_n(Cp^2R^b)M^1Z^1_{3-n}$

in Chemical Formula 1,

$M^1$ is a Group 4 transition metal;
each of $Cp^1$ and $Cp^2$ is independently cyclopentadienyl unsubstituted or substituted with $C_{1-20}$ hydrocarbon;
$R^a$ and $R^b$ are the same as or different from each other, and are each independently hydrogen, $C_{1-20}$ alkyl, $C_{1-20}$ alkoxy, $C_{2-20}$ alkoxyalkyl, $C_{6-20}$ aryl, $C_{6-20}$ aryloxy, $C_{2-20}$ alkenyl, $C_{7-40}$ alkylaryl, $C_{7-40}$ arylalkyl, $C_{8-40}$ arylalkenyl, $C_{2-20}$ alkynyl, or substituted or unsubstituted $C_{2-20}$ heteroaryl containing at least one heteroatom selected from the group consisting of N, O and S, provided that at least one of $R^a$ and $R^b$ is not hydrogen;
$Z^1$ are each independently halogen, $C_{1-20}$ alkyl, $C_{2-20}$ alkenyl, $C_{7-40}$ alkylaryl, $C_{7-40}$ arylalkyl, $C_{6-20}$ aryl, substituted or unsubstituted $C_{1-20}$ alkylidene, substituted or unsubstituted amino, $C_{2-20}$ alkylalkoxy, or $C_{7-40}$ arylalkoxy; and
n is 1 or 0;

[Chemical Formula 2]

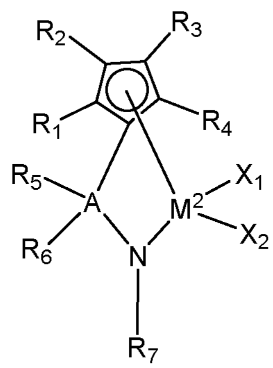

in Chemical Formula 2,

$M^2$ is a Group 4 transition metal;
A is carbon, silicon, or germanium;
$X^1$ and $X^2$ are the same as or different from each other, and are each independently halogen, or $C_{1-20}$ alkyl;
$R_1$ to $R_4$ are the same as or different from each other, and are each independently hydrogen, $C_{1-20}$ alkyl, $C_{2-20}$ alkenyl, $C_{6-20}$ aryl, $C_{7-20}$ alkylaryl, or $C_{7-20}$ arylalkyl, or two or more substituents adjacent to each other of $R_1$ to $R_4$ are connected with each other to form a substituted or unsubstituted aliphatic ring, a substituted or unsubstituted aromatic ring, or a substituted or unsubstituted heteroaromatic ring containing at least one selected from the group consisting of N, O and S;
$R_5$ and $R_6$ are the same as or different from each other, and are each independently $C_{1-20}$ alkyl, $C_{2-20}$ alkenyl, $C_{6-30}$ aryl, or $C_{2-20}$ alkoxyalkyl; and
$R_7$ is $C_{1-20}$ alkyl, $C_{2-20}$ alkenyl, or $C_{6-30}$ aryl.

Unless otherwise specified herein, following terms may be defined as follows.

The halogen may be fluorine (F), chlorine (Cl), bromine (Br) or iodine (I).

The $C_{1-30}$ alkyl group may be a linear, branched or cyclic alkyl group. Specifically, the $C_{1-20}$ alkyl group may be a $C_{1-15}$ linear alkyl group; a $C_{1-10}$ linear alkyl group; a $C_{1-5}$ linear alkyl group; a $C_{3-20}$ branched or cyclic alkyl group; a $C_{3-15}$ branched or cyclic alkyl group; or a $C_{3-10}$ branched or cyclic alkyl group. More specifically, the $C_{1-20}$ alkyl group may be a methyl group, an ethyl group, an n-propyl group, an iso-propyl group, an n-butyl group, an iso-butyl group, a tert-butyl group, an n-pentyl group, an iso-pentyl group, a neo-pentyl group, a cyclohexyl group or the like.

The $C_{2-30}$ alkenyl group may be a linear, branched, or cyclic alkenyl group. Specifically, the $C_{2-30}$ alkenyl group may be a $C_{2-20}$ linear alkenyl group, a $C_{2-10}$ linear alkenyl group, a $C_{2-5}$ linear alkenyl group, a $C_{3-20}$ branched alkenyl group, a $C_{3-15}$ branched alkenyl group, a $C_{3-10}$ branched alkenyl group, a $C_{5-20}$ cyclic alkenyl group, or a $C_{5-10}$ cyclic alkenyl group. More specifically, the $C_{2-20}$ alkenyl group may be an ethenyl group, a propenyl group, a butenyl group, a pentenyl group, a cyclohexenyl group, or the like.

The $C_{6-30}$ aryl may be a monocyclic, bicyclic or tricyclic aromatic hydrocarbon, and includes monocyclic or condensed aryl. Specifically, the $C_{6-30}$ aryl may be phenyl, biphenyl, naphthyl, anthracenyl, phenanthrenyl, fluorenyl, or the like.

The $C_{7-40}$ alkylaryl may be a substituent in which at least one hydrogen of the aryl is substituted with alkyl. Specifically, the $C_{7-40}$ alkylaryl may be methylphenyl, ethylphenyl, n-propylphenyl, iso-propylphenyl, n-butylphenyl, iso-butylphenyl, tert-butylphenyl, cyclohexylphenyl, or the like.

The $C_{7-40}$ arylalkyl may include a substituent in which at least one hydrogen of the alkyl is substituted with aryl. Specifically, the $C_{7-40}$ arylalkyl may be benzyl, phenylpropyl, phenylhexyl, or the like.

The $C_{6-10}$ aryloxy may be phenoxy, biphenoxy, naphthoxy, or the like, but the present disclosure is not limited thereto.

The $C_{1-20}$ alkoxy group may be a methoxy group, an ethoxy group, a phenyloxy group, a cyclohexyloxy group, or the like, but the present disclosure is not limited thereto.

The $C_{2-20}$ alkoxyalkyl group is a functional group in which at least one hydrogen of the alkyl group is substituted with an alkoxy group, and specifically, it may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, or the like, but the present disclosure is not limited thereto.

The $C_{1-20}$ alkylsilyl group or the $C_{1-20}$ alkoxysilyl group is a functional group in which 1 to 3 hydrogens of $-SiH_3$ are substituted with 1 to 3 alkyl groups or alkoxy groups described above, and specifically, it may be an alkylsilyl group such as a methylsilyl group, a dimethylsilyl group, a trimethylsilyl group, a dimethylethylsilyl group, a diethylmethylsilyl group or a dimethylpropylsilyl group; an alkoxysilyl group such as a methoxysilyl group, a dimethoxysilyl group, a trimethoxysilyl group or a dimethoxyethoxysilyl group; or an alkoxyalkylsilyl group such as a methoxydimethylsilyl group, a diethoxymethylsilyl group or a dimethoxypropylsilyl group, but the present disclosure is not limited thereto.

The $C_{1-20}$ silylalkyl group is a functional group in which at least one hydrogen of the alkyl group is substituted with a silyl group, and specifically, it may be $-CH_2-SiH_3$, a methylsilylmethyl group or a dimethylethoxysilylpropyl group, or the like, but the present disclosure is not limited thereto.

The sulfonate group has a structure of $-O-SO_2-R'$, wherein R' may be a $C_{1-20}$ alkyl group. Specifically, the $C_{1-20}$ sulfonate group may be a methanesulfonate group, a phenylsulfonate group, or the like, but the present disclosure is not limited thereto.

The heteroaryl is a $C_{2-20}$ heteroaryl containing at least one of N, O, and S as a heterogeneous element, and includes monocyclic or condensed heteroaryl. Specifically, it may be xanthene, thioxanthen, a thiophene group, a furan group, a pyrrole group, an imidazole group, a thiazole group, an oxazole group, an oxadiazole group, a triazole group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyrido-pyrimidinyl group, a pyrido-pyrazinyl group, a pyrazino-pyrazinyl group, an isoquinoline group, an indole group, a carbazole group, a benzoxazole group, a benzoimidazole group, a benzothiazole group, a benzocarbazole group, a benzothiophene group, a dibenzothiophene group, a benzofuranyl group, a phenanthroline group, an isoxazolyl group, a thiadiazolyl group, a phenothiazinyl group, a dibenzofuranyl group, or the like, but the present disclosure is not limited thereto.

In addition, the Group 4 transition metal may be titanium (Ti), zirconium (Zr), hafnium (Hf), or rutherpodium (Rf), and specifically titanium (Ti), zirconium (Zr), or hafnium (Hf). More specifically, it may be zirconium (Zr) or hafnium (Hf), but is not limited thereto.

In addition, the group 13 element may be boron (B), aluminum (Al), gallium (Ga), indium (In), or thallium (Tl), and specifically, boron (B), or aluminum (Al). But it is not limited thereto.

The above-mentioned substituents may be optionally substituted with one or more substituents selected from the group consisting of a hydroxyl group; halogen; an alkyl or alkenyl, aryl, alkoxy group; an alkyl or alkenyl, aryl, alkoxy group containing at least one heteroatom of Group 14 to 16 heteroatoms; a silyl group; an alkylsilyl or alkoxysilyl group;

a phosphine group; a phosphide group; a sulfonate group; and a sulfone group within the range of exhibiting the same or similar effects as the desired effects.

In addition, "two neighboring substituents are connected with each other to form an aliphatic or aromatic ring" means that the atom(s) of two substituents and the atom(s) to which the two substituents are bonded are connected with each other to form a ring. Specifically, examples in which $R_9$ and $R_{10}$ of $-NR_9R_{10}$ are connected with each other to form an aliphatic ring include a piperidinyl group, and examples in which $R_9$ and $R_{10}$ of $-NR_9R_{10}$ are connected with each other to form an aromatic ring include a pyrrolyl group.

In the catalyst composition, the first metallocene compound represented by the Chemical Formula 1 is a non-crosslinked compound including ligands of $Cp^1$ and $Cp^2$, and is advantageous for mainly producing a low molecular weight copolymer having a low SCB (short chain branch) content.

Specifically, in the Chemical Formula 1, the ligands of $Cp^1$ and $Cp^2$ may be the same or different from each other, and each may be cyclopentadienyl and substituted with one or more, or one to three $C_{1-10}$ alkyls. As the ligands of $Cp^1$ and $Cp^2$ have a pair of non-covalent electrons capable of acting as a Lewis base, high polymerization activity may be achieved. Particularly, as the ligands of $Cp^1$ and $Cp^2$ are cyclopentadienyl with relatively little steric hindrance, they exhibit high polymerization activity and low hydrogen reactivity, and thus low molecular weight ethylene/1-hexene copolymers can be polymerized with high activity.

In addition, the ligands of $Cp^1$ and $Cp^2$ can easily control properties such as chemical structure, molecular weight, molecular weight distribution, mechanical properties, and transparency of the ethylene/1-hexene copolymer to be prepared by adjusting the degree of steric hindrance effect depending on the type of the substituted functional groups. Specifically, the ligands of $Cp^1$ and $Cp^2$ are substituted with $R^a$ and $R^b$, respectively, wherein $R^a$ and $R^b$ are the same as or different from each other, and each may independently be hydrogen, $C_{1-20}$ alkyl, $C_{2-20}$ alkoxyalkyl, $C_{7-40}$ arylalkyl, or substituted or unsubstituted $C_{2-12}$ heteroaryl containing at least one heteroatom selected from the group consisting of N, O and S, and more specifically $C_{1-10}$alkyl, $C_{2-10}$ alkoxyalkyl, $C_{7-20}$ arylalkyl, or substituted or unsubstituted $C_{4-12}$ heteroaryl containing at least one heteroatom selected from the group consisting of N, O and S.

$M^1Z^1_{3-n}$ presents between the ligands of $Cp^1$ and $Cp^2$, and $M^1Z^1_{3-n}$ may affect storage stability of metal complex. In order to effectively ensure this effect, $Z^1$ may each independently be halogen or $C_{1-20}$ alkyl, and more specifically F, Cl, Br or I. Further, $M^1$ may each independently be Ti, Zr or Hf; Zr or Hf; or Zr.

The first metallocene compound may be a compound in which each of $Cp^1$ and $Cp^2$ is an unsubstituted or substituted cyclopentadienyl group, and $R^a$ and $R^b$ are each independently hydrogen, $C_{1-10}$ alkyl, $C_{2-10}$ alkoxyalkyl, or $C_{7-20}$ arylalkyl, wherein at least one of $R^a$ and $R^b$ is an alkoxyalkyl group such as t-butoxyhexyl group, more specifically, a substituent of $-(CH_2)_p-OR^c$ (wherein $R^c$ is a linear or branched alkyl group having 1 to 6 carbon atoms, and p is an integer of 2 to 4). And, this case shows a low conversion to the comonomer compared to other Cp-based catalysts not including the above substituent in the preparation of an ethylene/1-hexene copolymer, so that a low molecular weight polyolefin in which the degree of copolymerization or comonomer distribution is controlled can be prepared. In addition, when the first metallocene compound having the above structure is supported on a support, the $-(CH_2)_p-OR^c$ group among the substituents can form a covalent bond through close interaction with the silanol group on the surface of the silica used as the support. Therefore, stable supported polymerization is possible.

The first metallocene compound represented by the Chemical Formula 1 may be a compound represented by one of the following structural formulae, but is not limited thereto:

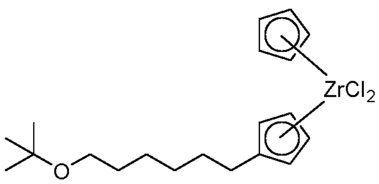
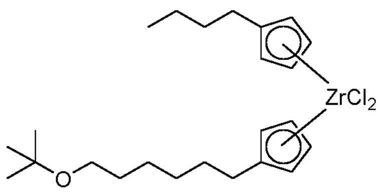
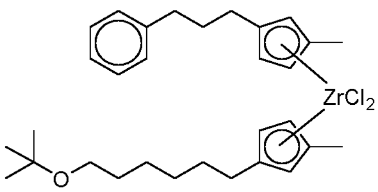
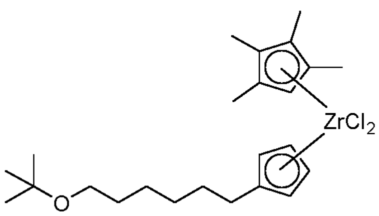
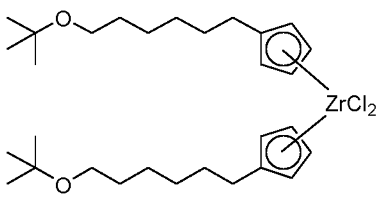
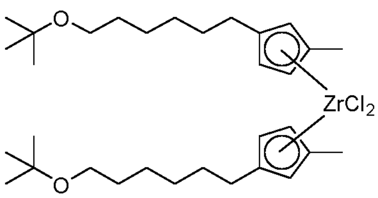

The first metallocene compound represented by the Chemical Formula 1 may be synthesized by applying known reactions, and a more detailed synthesis method may be understood with reference to Examples.

The method for preparing the polyethylene according to the present disclosure is a mono-modal polymerization process, wherein at least one first metallocene compound represented by the Chemical Formula 1 is used with at least one second metallocene compound to be described later. By using them, it is possible to control the ratio of the high molecular weight polymer and the low molecular weight polymer in the molecule of the ethylene/1-hexene copolymer, and improve flexibility and processability when applied to high-pressure heating pipes, PE-RT pipes, or large-diameter pipes.

Meanwhile, in one embodiment of the present disclosure, the second metallocene compound represented by the Chemical Formula 2 includes an aromatic ring compound containing cyclopentadienyl or a derivative thereof and a nitrogen atom, and has a structure in which the aromatic ring compound and the nitrogen atom are crosslinked by $AR_5R_6$, which is a bridge group. The second metallocene compound having such a specific structure is applied to the polymerization reaction of the ethylene/1-hexene copolymer to exhibit high activity and copolymerizability, and can provide an ethylene/1-hexene copolymer having a high molecular weight.

In particular, the second metallocene compound represented by the Chemical Formula 2 has a well-known structure of CGC (constrained geometry catalyst), so that comonomer incorporation is excellent, and the distribution of the comonomer is controlled by the electronic and steric characteristics of the ligand. These properties control ASL (average ethylene sequence length) to increase the middle and high molecular weight regions in the molecular weight distribution, thereby increasing the tie molecule fraction and the entanglement of polymer chains. Accordingly, it is easy to prepare an ethylene/1-hexene copolymer exhibiting long-term stability and processability together with excellent pipe resistance to internal pressure.

$M^2$ of the metallocene compound represented by the Chemical Formula 2 may be a Group 4 transition metal, and may preferably be titanium (Ti), zirconium (Zr), or hafnium (Hf).

Preferably, A in Chemical Formula 2 may be silicon.

Preferably, $X_1$ and $X_2$ in Chemical Formula 2 may each independently be methyl or chlorine (Cl).

Preferably, $R_1$ to $R_4$ in Chemical Formula 2 are the same as or different from each other, and each may independently be methyl or phenyl.

Preferably, two or more of $R_1$ to $R_4$ adjacent to each other in the Chemical Formula 2 are connected with each other to form a substituted or unsubstituted aliphatic ring, a substituted or unsubstituted aromatic ring, or a substituted or unsubstituted heteroaromatic ring containing at least one selected from the group consisting of N, O and S. For example, in Chemical Formula 2, as two or more of $R_8$ to $R_{11}$ adjacent to each other are connected to form an aliphatic, aromatic, or heteroaromatic ring, an indenyl group, a fluorenyl group, a benzothiophene group, or a dibenzothiophene group in which cyclopentadiene is fused may be formed. In addition, the indenyl group, fluorenyl group, benzothiophene group, and dibenzothiophene group may be substituted with one or more substituents.

Preferably, $R_5$ and $R_6$ in Chemical Formula 2 may be the same as or different from each other, and may each independently be methyl, ethyl, phenyl, propyl, hexyl, or tert-butoxyhexyl.

Preferably, $R_7$ in Chemical Formula 2 may be methyl, ethyl, n-propyl, iso-propyl, n-butyl, or tert-butyl.

As the second metallocene compound capable of providing an ethylene/1-hexene copolymer excellent in both long-term stability and processability as well as pipe resistance to internal pressure due to the middle and high molecular weight regions, the metallocene compound of the Chemical Formula 2 may be any one selected from the group consisting of the following compounds, but the present disclosure is not limited thereto:

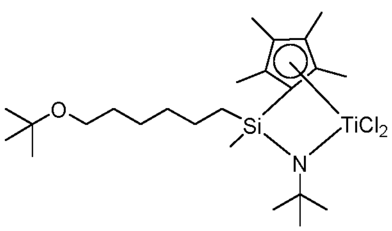

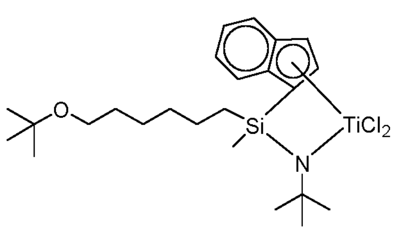

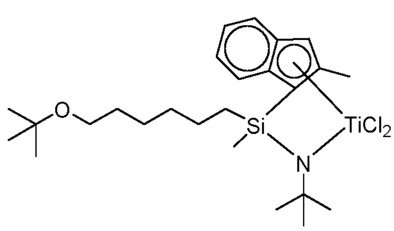

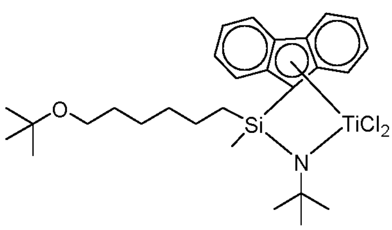

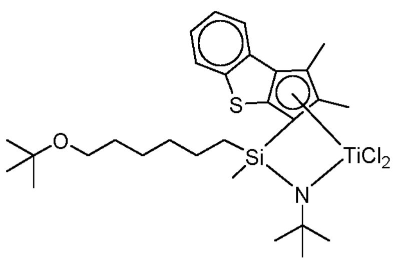

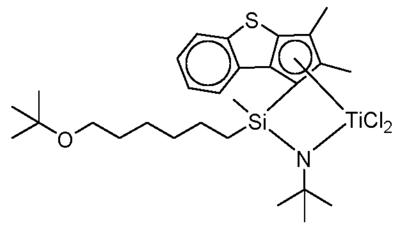 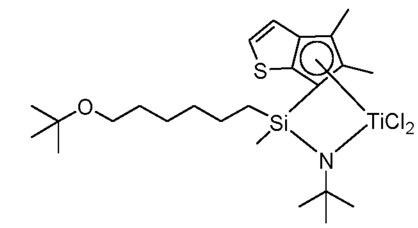 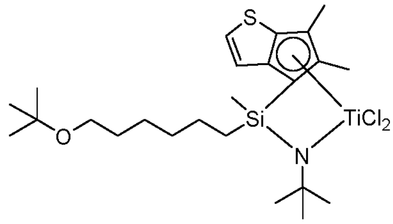

The second metallocene compound represented by the Chemical Formula 2 may be synthesized by applying known reactions. Specifically, it may be prepared by connecting a nitrogen compound and a cyclopentadiene derivative with a bridge compound to prepare a ligand compound, and then adding a metal precursor compound to perform metalation. However, the method is not limited thereto, and a more detailed synthesis method may be understood with reference to Examples.

The second metallocene compound of Chemical Formula 2 has excellent activity and can polymerize a high molecular weight ethylene/1-hexene copolymer. In particular, even when used by being supported on a support, it exhibits high polymerization activity, so that an ethylene/1-hexene copolymer having an ultra-high molecular weight can be prepared.

In addition, even when a polymerization reaction is performed with hydrogen to prepare an ethylene/1-hexene copolymer having a high molecular weight along with an optimized molecular weight distribution, the second metallocene compound of Chemical Formula 2 according to the present disclosure exhibits low hydrogen reactivity, so that it is possible to copolymerize an ethylene/1-hexene having an ultra-high molecular weight with high activity. Therefore, even when used in combination with a catalyst having other characteristics, an ethylene/1-hexene copolymer satisfying the characteristics of high molecular weight can be prepared without deterioration in activity, and thus an ethylene/1-hexene copolymer having an optimized molecular weight distribution while including a high molecular weight ethylene/1-hexene copolymer can be easily prepared.

As described above, in the catalyst composition, the first metallocene compound represented by the Chemical Formula 1 may mainly contribute to making a low molecular weight copolymer having a low SCB content, and the second metallocene compound represented by the Chemical Formula 2 may mainly contribute to making a high molecular weight copolymer having a high SCB content. More specifically, the catalyst composition exhibits high comonomer incorporation with respect to 1-hexene in the high molecular weight region of the copolymer by the second metallocene compound, and low comonomer incorporation with respect to 1-hexene in the low molecular weight region of the copolymer by the first metallocene compound. As a result, it is possible to prepare an ethylene/1-hexene copolymer having a BOCD (Broad Orthogonal Co-monomer Distribution) structure in which 1-hexene comonomers are incorporated predominantly in high-molecular-weight main chains, that is, a structure in which the SCB content increases as the molecular weight increases while having a wide molecular weight distribution, thereby exhibiting excellent physical properties with excellent processability.

Particularly, controlling the content ratio of the first and second metallocene compounds in the catalyst composition may enable the above-described physical properties and further enhance the improvement effect. Specifically, when including the second metallocene compound in a higher content than the first metallocene compound in the catalyst composition, the middle and high molecular weight regions in the molecule are increased to increase the tie molecule fraction and the entanglement of polymer chains, thereby optimizing the ratio of the high molecular weight region and the low molecular weight region. Specifically, the first and second metallocene compounds should be included in a molar ratio of 1:2 to 1:8. Preferably, the first and second metallocene compounds may be included in a molar ratio of 1:25 to 1:75, 1:3 to 1:7, 1:4 to 1:6, or 1:4.5 to 1:5.5. When the content ratio of the first and second metallocene compounds in the catalyst composition is out of the above range, the molecular weight distribution of the ethylene/1-hexene copolymer is narrowed, resulting in poor physical properties and processability. When the first metallocene compound and the second metallocene compound are supported in the molar ratio as described above, the ethylene/1-hexene copolymer prepared using the same may have improved long-term stability and processability as well as excellent pipe resistance to internal pressure, 10 MPa or more of MRS required for large-diameter polyethylene pipes, by increasing the middle and high molecular weight regions to increase the tie molecule fraction and the entanglement of polymer chains.

Meanwhile, the first and second metallocene compounds have the above-described structural characteristics, so they may be stably supported on a support.

In this case, the first and second metallocene compounds are used in a state supported on the support. When used as a supported catalyst, the polymer to be prepared has excellent particle shape and bulk density, and the catalyst can be suitably used in conventional slurry polymerization, bulk polymerization, and gas phase polymerization.

The support may be silica, alumina, magnesia, silica-alumina, orsilica-magnesia, and it may usually contain oxides, carbonates, sulfates, or nitrates such as $Na_2O$, $K_2CO_3$, $BaSO_4$, $Mg(NO_3)_2$ and the like. Among the above-mentioned supports, the silica support has little catalyst released from the surface of the support in the ethylene/1-hexene copolymerization process, because the metallocene compound is supported by chemical bonding with a reactive functional group such as a siloxane group present on the surface of the silica support. As a result, when the ethylene/1-hexene copolymer is prepared by slurry polymerization or gas phase polymerization, a fouling phenomenon, sticking to the wall surface of the reactor or with each other, may be minimized.

In addition, the support may be surface-modified by a calcination or drying process in order to increase supporting efficiency and minimize leaching and fouling. Through the surface modification step as described above, moisture on the surface of the support that inhibits the reaction with the supported component may be removed, and the content of reactive functional groups capable of chemical bonding with the supported components, for example, a hydroxyl group and a siloxane group, may be increased.

Specifically, the calcination or drying process of the support may be performed in a range from a temperature at which moisture disappears from the surface of the support to a temperature at which reactive functional groups, particularly hydroxyl groups (OH groups) present on the surface, are completely eliminated. Specifically, the temperature may be 150 to 600 °C, or 200 to 500 °C. When the temperature is low, less than 150 °C, the moisture removal efficiency is low, and as a result, the moisture remaining on the support may react with the cocatalyst to lower the supporting efficiency. When the temperature is excessibily high, higher than 600 °C, pores on the surface of the support may be combined with each other to reduce specific surface area, and many reactive functional groups such as hydroxyl groups or silanol groups may be lost from the surface, leaving only siloxane groups. Thus, reactive sites with cocatalyst may be reduced, which is not preferable.

When the first and second metallocene compounds are supported on a support and the support is silica, the first and second metallocene compounds may be supported in a total amount of 40 μmol or more, or 80 μmol or more, and 240 μmol or less, or 160 μmol or less based on 1 g of silica. When supported within the above range, it may exhibit an appropriate supporting activity, which may be advantageous in terms of maintaining the activity of the catalyst and economic feasibility.

In addition, the catalyst composition may further include a cocatalyst in terms of improving high activity and process stability.

The cocatalyst may include at least one selected from the group consisting of compounds represented by the following Chemical Formulae 3 to 5.

[Chemical Formula 3] $-[Al(R_{31})-O]_m-$

in Chemical Formula 3,

$R_{31}$ are the same as or different from each other, and are each independently halogen; $C_{1-20}$ hydrocarbon; or $C_{1-20}$ halogen-substituted hydrocarbon; and
m is an integer of 2 or more;

[Chemical Formula 4] $J(R_{41})_3$

in Chemical Formula 4,

$R_{41}$ are the same as or different from each other, and are each independently halogen; $C_{1-20}$ hydrocarbon; or $C_{1-20}$ halogen-substituted hydrocarbon; and
J is aluminum or boron;

[Chemical Formula 5] $[E-H]^+[ZD_4]^-$ or $[E]^+[ZD_4]^-$

in Chemical Formula 5,

E is a neutral or cationic Lewis base;
H is a hydrogen atom;
Z is a Group 13 element; and
D are the same as or different from each other, and are each independently $C_{6-20}$ aryl or $C_{1-20}$ alkyl, wherein the $C_{6-20}$ aryl or $C_{1-20}$ alkyl is unsubstituted or substituted with at least one substituent selected from the group consisting of halogen, $C_{1-20}$ alkyl, $C_{1-20}$ alkoxy and $C_{6-20}$ aryloxy.

Specifically, the $[E-H]^+$ in Chemical Formula 5 is a Bronsted acid.

Examples of the compound represented by the Chemical Formula 3 may include an alkylaluminoxane-based

compound such as methylaluminoxane, ethylaluminoxane, isobutylaluminoxane, butylaluminoxane, and the like, and any one or a mixture thereof may be used.

Examples of the compound represented by the Chemical Formula 4 may include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, trip-tolylaluminum, dimethylaluminummethoxide, dimethylaluminumethoxide, trimethylboron, triethylboron, triisobutylboron, tripropylboron, tributylboron, and the like, and any one or a mixture thereof may be used.

Examples of the compound represented by the Chemical Formula 5 may include triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, triphenylcarbonium tetrapentafluorophenylboron, and the like, and any one or a mixture thereof may be used.

Among the compounds described above, the cocatalyst may be, more specifically, an alkylaluminoxane-based cocatalyst such as methylaluminoxane.

The alkylaluminoxane-based cocatalyst stabilizes the metallocene compounds and acts as a Lewis acid, so that further enhances catalytic activity by including a metal element capable of forming a bond with a functional group introduced into a bridge group of the second metallocene compound through Lewis acid-base interaction.

In addition, the amount of the cocatalyst used may be appropriately adjusted depending on desired properties or effects of the catalyst and the resin composition. For example, when silica is used as the support, the cocatalyst may be supported in an amount of 8 mmol or more, or 10 mmol or more, and 25 mmol or less, or 20 mmol or less based on a weight of the support, for example, 1 g of silica.

The catalyst composition having the above configuration may be prepared by a method including the steps of: supporting a cocatalyst compound on a support; and supporting the metallocene compound represented by the Chemical Formula 1 on the support. Herein, the supporting order of the cocatalyst and the metallocene compound represented by the Chemical Formula 1 may be changed, if necessary. In consideration of the effect of the supported catalyst having a structure determined according to the supporting order, supporting the metallocene compound after supporting the cocatalyst on the support can achieve higher catalytic activity and better process stability in the preparation of an ethylene/1-hexene copolymer.

In addition, the catalyst composition described above may be used by itself for polymerization, or may be used in a prepolymerized state by contacting with ethylene monomers before the use in a polymerization reaction. In this case, the preparation method according to an embodiment of the present disclosure may further include a prepolymerization step of contacting the catalyst composition with ethylene monomers before preparing an ethylene/1-hexene copolymer by a polymerization reaction.

In addition, the catalyst composition may be dissolved or diluted in an aliphatic hydrocarbon solvent having 5 to 12 carbon atoms such as pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, and then injected. The solvent used herein is preferably used after removing a small amount of water or air, which acts as a catalyst poison, by treating with a small amount of alkyl aluminum. It is also possible to further use the cocatalyst.

Meanwhile, the polymerization process may be performed by contacting ethylene and 1-hexene in the presence of the above-described catalyst composition.

In particular, the polymerization reaction is characterized in that it is performed in a mono-modal polymerization process. Herein, the mono-modal polymerization process means performing the copolymerization process in a single polymerization reactor, and may preferably be performed in one loop-type slurry reactor.

In general, the conventional multi-modal polymerization reaction uses two or more reactors depending on the number of catalysts, and each catalyst is added to each of the two or more reactors to perform the polymerization

reaction. In this reaction, polymers having different molecular weights are prepared, and then mixed. However, this case has a problem in that uniformity is lowered due to the different molecular weights. In contrast, since the present disclosure performs a mono-modal polymerization reaction in a single reactor by hybrid supporting two types of catalysts on a single support, a low molecule weight polymer and a high molecular polymer are simultaneously polymerized, and as a result, a polymer with excellent uniformity can be prepared.

The polymerization may be performed at a temperature of 25 °C to 500 °C, preferably 25 °C to 200 °C, and more preferably 50 °C to 150 °C. In addition, the polymerization may be performed at a pressure of 1 $kgf/cm^2$ to 100 $kgf/cm^2$, preferably 1 $kgf/cm^2$ to 50 $kgf/cm^2$, and more preferably 5 $kgf/cm^2$ to 30 $kgf/cm^2$.

In addition, in the copolymerization process, the input of 1-hexene as a comonomer may be about 4.0 wt% to about 6.0 wt% based on the total input weight of ethylene. More specifically, the input of 1-hexene comonomer may be about 4.1 wt% or more, about 4.2 wt% or more, about 4.3 wt% or more, about 4.4 wt% or more, or about 4.5 wt% or more, and about 5.9 wt% or less, about 5.8 wt% or less, 5.6 wt% or less, about 5.4 wt% or less, about 5.2 wt% or less, or about 5.0 wt% or less.

Meanwhile, the ethylene/1-hexene copolymer according to the present disclosure may be prepared by copolymerizing ethylene and 1-hexene in the mono-modal polymerization process described above in the presence of the above-described catalyst composition while introducing hydrogen gas.

For example, the hydrogen gas may be introduced in an amount of 35 ppm to 250 ppm, 40 ppm to 200 ppm, 50 ppm to 190 ppm, 55 ppm to 180 ppm, 58 ppm to 170 ppm, or 60 ppm to 145 ppm based on the weight of ethylene. The above hydrogen gas content maintains the chain propagation and chain transfer rate almost constant, and optimizes the content of the high molecular weight region and the low molecular weight region of the polymer with an optimized molecular weight distribution. Thus, the hydrogen gas content may be within the above-mentioned range in terms of improving long-term stability and processability during pipe processing and securing excellent pressure resistance.

The ethylene/1-hexene copolymer prepared by the above-described preparation method may exhibit excellent environmental stress cracking resistance due to an optimized molecular weight distribution and excellent processability due to a high SCB content in a high molecular weight region. Due to the satisfaction of the above physical properties, the ethylene/1-hexene copolymer according to the present disclosure has good processability and extrusion properties, and exhibits excellent environmental stress cracking resistance, so it may be preferably applied to high-pressure heating pipes, PE-RT pipes or large-diameter pipes, etc.

Meanwhile, there is provided a pipe including the above-described ethylene/1-hexene copolymer.

In particular, the pipe has good processability and extrusion characteristics, and excellent environmental stress cracking resistance by increasing the middle and high molecular weight regions in the molecules to increase the tie molecule fraction and the entanglement of polymer chains, and controlling a ratio of high molecular polymer region and low molecular polymer region.

For example, the pipe may be a high-pressure heating pipe, a PE-RT pipe, or a large-diameter pipe, and specifically, may be a large-diameter pipe having a diameter of 100 mm or more or 100 mm to 500 mm. For example, the diameter of the large-diameter pipe may be 110 mm or more, 120 mm or more, 130 mm or more, 140 mm or more, 150 mm or more, 160 mm or more, 180 mm or more, 200 mm or more, 220 mm or more, 250 mmor or more, 300 mm or more, 350 mm or more, 400 mm or more, or 450 mm or more.

Hereinafter, the function and effect of the present invention will be described in more detail through specific examples. However, these examples are for illustrative purposes only, and the invention is not intended to be limited by these examples.

**<Examples>**

**[Preparation of metallocene compound]**

**Synthesis Example 1: Preparation of first metallocene compound (1)**

t-butyl-O-$(CH_2)_6$-Cl was prepared by the method shown in Tetrahedron Lett. 2951 (1988) using 6-chlorohexanol, and reacted with cyclopentadienyl sodium (NaCp) to obtain t-butyl-O-$(CH_2)_6$-$C_5H_5$ (yield 60%, b.p. 80 °C/ 0.1 mmHg).

In addition, t-butyl-O-$(CH_2)_6$-$C_5H_5$ was dissolved in tetrahydrofuran (THF) at -78 °C, and normal butyllithium (n-BuLi) was slowly added thereto. Thereafter, it was heated to room temperature and reacted for 8 hours. The lithium salt solution synthesized as described above was slowly added to a suspension solution of $ZrCl_4(THF)_2$ (1.70 g, 4.50 mmol)/THF(30 mL) at -78 °C, and further reacted for about 6 hours at room temperature. All volatiles were dried under vacuum and the resulting oily liquid material was filtered by adding a hexane solvent. The filtered solution was dried under vacuum, and hexane was added to obtain a precipitate at a low temperature (-20 °C). The obtained precipitate was filtered at a low temperature to obtain [t-Bu-O-$(CH_2)_6$-$C_5H_4]_2ZrCl_2$ compound (1) in the form of a white solid (yield 92%).

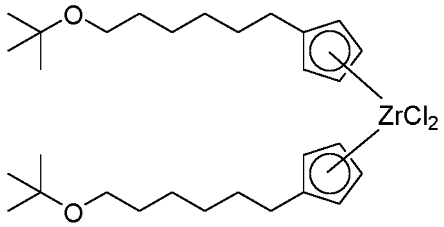

(1)

$^1H$ NMR (300 MHz, $CDCl_3$): 6.28 (t, J = 2.6 Hz, 2 H), 6.19 (t, J = 2.6 Hz, 2 H), 3.31 (t, 6.6 Hz, 2 H), 2.62 (t, J = 8 Hz), 1.7 -1.3 (m, 8 H), 1.17 (s, 9 H).

$^{13}C$ NMR ($CDCl_3$): 135.09, 116.66, 112.28, 72.42, 61.52, 30.66, 30.61, 30.14, 29.18, 27.58, 26.00.

**Synthesis Example 2: Preparation of second transition metal compound (2)**

**2-1) Preparation of ligand compound**

50 g of Mg(s) was added to a 10 L reactor at room temperature, followed by 300 mL of THF. 0.5 g of $I_2$ was added, and the reactor temperature was maintained at 50 °C. After the reactor temperature was stabilized, 250 g of 6-t-butoxyhexyl chloride was added to the reactor at a rate of 5 mL/min using a feeding pump. It was observed that the reactor temperature rose by 4 °C to 5 °C with the addition of 6-t-butoxyhexylchloride. It was stirred for 12 hours while continuously adding 6-t-butoxyhexylchloride. After reaction for 12 hours, a black reaction solution was obtained. 2 mL of the black solution was taken, and water was added thereto to obtain an organic layer. The organic layer was confirmed to be 6-t-butoxyhexane through $^1H$-NMR. From this, it was confirmed that Grignard reaction was well performed. Thus, 6-t-butoxyhexyl magnesium chloride was synthesized.

500 g of methylsilyltrichloride ($MeSiCl_3$) and 1 L of THF were introduced to a reactor, and then the reactor temperature was cooled down to -20 °C. 560 g of the 6-t-butoxyhexyl magnesium chloride synthesized above was added to the reactor at a rate of 5 mL/min using a feeding pump. After completion of the feeding of Grignard reagent, the mixture was stirred for 12 hours while slowly raising the reactor temperature to room temperature. After reaction for 12 hours, it was confirmed that white $MgCl_2$ salt was produced. 4 L of hexane was added thereto and the salt was removed through a labdori to obtain a filtered solution. After the filtered solution was added to the reactor, hexane was removed at 70 °C to obtain a pale yellow liquid. The obtained liquid was confirmed to be methyl(6-t-butoxy hexyl)dichlorosilane through $^1H$-NMR.

$^1H$-NMR ($CDCl_3$): 3.3 (t, 2H), 1.5 (m, 3H), 1.3 (m, 5H), 1.2 (s, 9H), 1.1 (m, 2H), 0.7 (s, 3H).

1.2 mol (150 g) of tetramethylcyclopentadiene and 2.4 L of THF were added to the reactor, and then the reactor temperature was cooled down to -20 °C. 480 mL of n-BuLi was added to the reactor at a rate of 5 ml/min using a feeding pump. After n-BuLi was added, the mixture was stirred for 12 hours while slowly raising the reactor temperature to room temperature. After reaction for 12 hours, an equivalent of methyl(6-t-butoxy hexyl)dichlorosilane (326 g, 350 mL) was rapidly added to the reactor. The mixture was stirred for 12 hours while slowly raising the reactor temperature to room temperature. Then, the reactor temperature was cooled to 0 °C again, and 2 equivalents of $t\text{-}BuNH_2$ was added. The mixture was stirred for 12 hours while slowly raising the reactor temperature to room temperature. After reaction for 12 hours, THF was removed. Thereafter, 4 L of hexane was added and the salt was removed through a labdori to obtain a filtered solution. The filtered solution was added to the reactor again, and hexane was removed at 70 °C to obtain a yellow solution. The yellow solution obtained above was confirmed to be methyl(6-t-butoxyhexyl)(tetramethylCpH)t-butylaminosilane through $^1H$-NMR.

**2-2) Preparation of metallocene compound**

$TiCl_3(THF)_3$ (10 mmol) was rapidly added to a dilithium salt of a ligand at -78 °C, which was synthesized from n-BuLi and the ligand compound of dimethyl(tetramethylCpH)t-butylaminosilane synthesized in 3-1 in THF solution. While slowly heating the reaction solution from -78 °C to room temperature, it was stirred for 12 hours. After stirring for 12 hours, an equivalent of $PbCl_2$ (10 mmol) was added to the reaction solution at room temperature, and then stirred for 12 hours. After stirring for 12 hours, a dark black solution having a blue color was obtained. THF was removed from the resulting reaction solution, and then hexane was added to filter the product. Hexane was removed from the filtered solution, and then the product was confirmed to be $(tBu\text{-}O\text{-}(CH_2)_6)(CH_3)Si(C_5(CH_3)_4)(tBu\text{-}N)TiCl_2$ compound (2), ([methyl(6-t-buthoxyhexyl)silyl(η5-tetramethylCp)(t-Butylamido)]$TiCl_2$), through $^1H$-NMR.

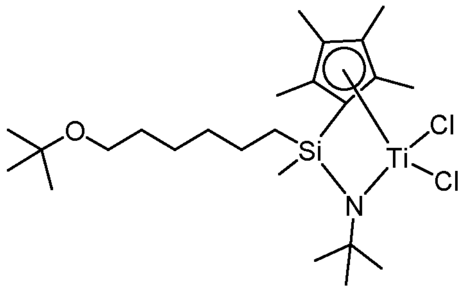

(2)

$^1$H-NMR ($CDCl_3$): 3.3 (s, 4H), 2.2 (s, 6H), 2.1 (s, 6H), 1.8 ~ 0.8 (m), 1.4 (s, 9H), 1.2(s, 9H), 0.7 (s, 3H).

**[Preparation of supported catalyst]**

**Preparation Example 1: Preparation of hybrid supported catalyst**

3.0 kg of toluene solution was added to a 20 L stainless steel (sus) high pressure reactor, and the reactor temperature was maintained at 40 °C. 500 g of silica (SP2212, manufactured by Grace Davison) dehydrated at a temperature of 600 °C for 12 hours under vacuum was added to the reactor and sufficiently dispersed, and then 2.78 kg of a 10 wt% methylaluminoxane (MAO)/toluene solution was added thereto, followed by stirring at 200 rpm at 80 °C for 15 hours or more.

After lowering the reactor temperature to 40 °C, 60 g of the first metallocene compound of the following precursor (1) prepared in Synthesis Example 1/toluene solution (7.8 wt% in toluene) was added to the reactor and stirred at 200 rpm for 1 hour. Then, 230 g of the second metallocene compound of the following precursor (2) prepared in Synthesis Example 2/toluene solution (7.8 wt% in toluene) was added to the reactor and stirred at 200 rpm for 1 hour. Herein, the molar ratio of the first metallocene compound (1) and the second metallocene compound (2) was 1:5 (the number of moles of first metallocene compound (1): the number of moles of second metallocene compound (2)).

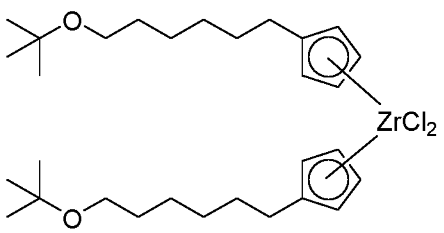

(1)

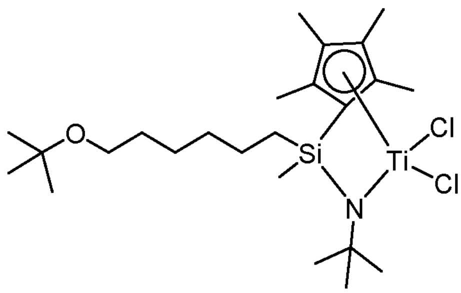

(2)

70 g of a cocatalyst (anilinium tetrakis(pentafluorophenyl)borate) was diluted in toluene, and then added to the reactor, followed by stirring at 200 rpm for 15 hours or more. After lowering the reactor temperature to room temperature, the stirring was stopped, followed by settling for 30 minutes and decantation of the reaction solution.

The toluene slurry was transferred to a filter dryer and filtered. After adding 3.0 kg of toluene and stirring for 10 minutes, the stirring was stopped and filtration was performed. After adding 3.0 kg of hexane to the reactor and stirring for 10 minutes, the stirring was stopped and filtration was performed. It was dried under reduced pressure at 50 °C for 4 hours to prepare 500g-$SiO_2$ supported catalyst (A).

**Preparation Example 2: Preparation of hybrid supported catalyst**

A hybrid supported catalyst according to Preparation Example 2 was prepared in the same manner as in Preparation Example 1, except that the molar ratio of the first metallocene compound (1) and the second metallocene compound (2) was changed to 1:3 (the number of moles of first metallocene compound (1): the number of moles of second metallocene compound (2)).

**Preparation Example 3: Preparation of hybrid supported catalyst**

A hybrid supported catalyst according to Preparation Example 2 was prepared in the same manner as in

Preparation Example 1, except that the molar ratio of the first metallocene compound (1) and the second metallocene compound (2) was changed to 1:7 (the number of moles of first metallocene compound (1): the number of moles of second metallocene compound (2)).

**Comparative Preparation Example 1: Preparation of hybrid supported catalyst**

A hybrid supported catalyst according to Comparative Preparation Example 1 was prepared in the same manner as in Preparation Example 1, except that the molar ratio of the following first metallocene compound (1) and the following second metallocene compound (3) was changed to 1:5 (the number of moles of first metallocene compound (1): the number of moles of second metallocene compound (3)).

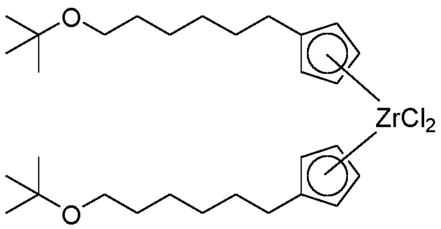
(1)
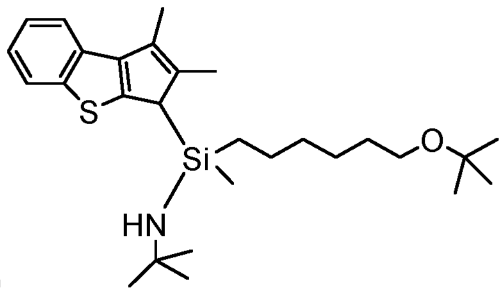
(3)

**Comparative Preparation Example 2: Preparation of hybrid supported catalyst**

A hybrid supported catalyst according to Comparative Preparation Example 2 was prepared in the same manner as in Preparation Example 1, except that the molar ratio of the following first metallocene compound (1) and the following second metallocene compound (4) was changed to 1:8 (the number of moles of first metallocene compound (1): the number of moles of second metallocene compound (4)).

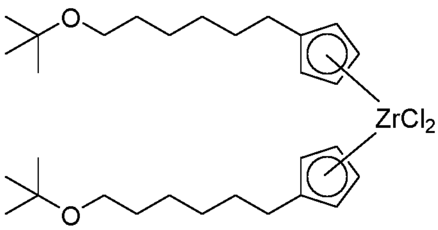
(1)
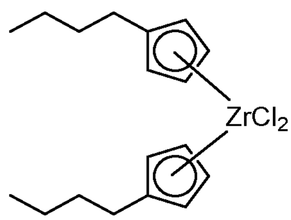
(4)

**Comparative Preparation Example 3: Preparation of hybrid supported catalyst**

A hybrid supported catalyst according to Comparative Preparation Example 3 was prepared in the same manner as in Preparation Example 1, except that the molar ratio of the first metallocene compound (1) and the second metallocene compound (2) was changed to 1:1.2 (the number of moles of first metallocene compound (1): the number of moles of second metallocene compound (2)).

**Comparative Preparation Example 4: Preparation of hybrid supported catalyst**

A hybrid supported catalyst according to Comparative Preparation Example 4 was prepared in the same manner as in Comparative Preparation Example 1, except that the molar ratio of the first metallocene compound (1) and the second metallocene compound (3) was changed to 1:7 (the number of moles of first metallocene compound (1): the number of moles of second metallocene compound (3)).

**Comparative Preparation Example 5: Preparation of hybrid supported catalyst**

A hybrid supported catalyst according to Comparative Preparation Example 5 was prepared in the same manner as in Preparation Example 1, except that the molar ratio of the following first metallocene compound (5) and the following second metallocene compound (2) was changed to 1:10 (the number of moles of first metallocene compound (5): the number of moles of second metallocene compound (2)).

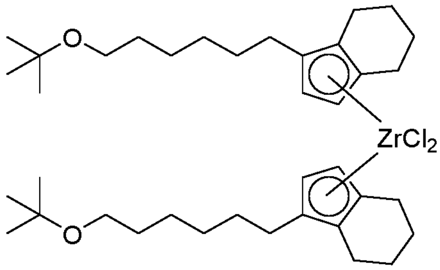

(5)

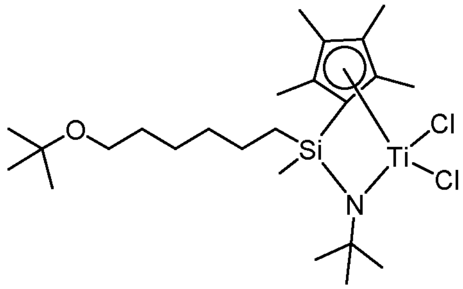

(2)

**Comparative Preparation Example 6: Preparation of hybrid supported catalyst**

A hybrid supported catalyst according to Comparative Preparation Example 6 was prepared in the same manner as in Preparation Example 1, except that the molar ratio of the first metallocene compound (1) and the second metallocene compound (2) was changed to 1:9 (the number of moles of first metallocene compound (1): the number of moles of second metallocene compound (2)).

**Comparative Preparation Example 7: Preparation of hybrid supported catalyst**

A hybrid supported catalyst according to Comparative Preparation Example 7 was prepared in the same manner as in Comparative Preparation Example 5, except that the molar ratio of the first metallocene compound (5) and the second metallocene compound (2) was changed to 1:5 (the number of moles of first metallocene compound (5): the number of moles of second metallocene compound (2)).

**Comparative Preparation Example 8: Preparation of hybrid supported catalyst**

A hybrid supported catalyst according to Comparative Preparation Example 1 was prepared in the same manner as in Preparation Example 1, except that the molar ratio of the following first metallocene compound (1) and the following second metallocene compound (6) was changed to 1:5 (the number of moles of first metallocene compound (1): the number of moles of second metallocene compound (6)).

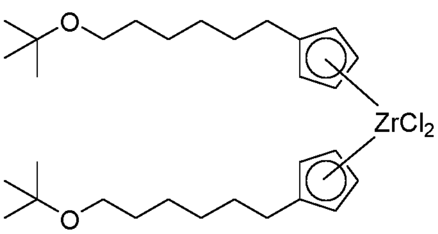

(1)

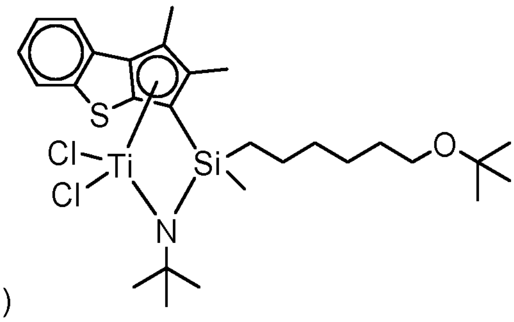

(6)

**[Preparation of ethylene/1-hexene copolymer]**

**Example 1: Preparation of ethylene/1-hexene copolymer**

Under the conditions shown in Table 1 below, an ethylene/1-hexene copolymer was prepared using the hybrid supported metallocene catalyst prepared in Preparation Example 1 in a uni-modal process with one polymerization reactor which is a hexane slurry stirred tank process polymerization reactor.

**Example 2: Preparation of ethylene/1-hexene copolymer**

An ethylene/1-hexene copolymer of Example 2 was prepared in the same manner as in Example 1, except that the copolymerization process was performed under the conditions shown in Table 1 below.

**Example 3: Preparation of ethylene/1-hexene copolymer**

An ethylene/1-hexene copolymer of Example 3 was prepared in the same manner as in Example 1, except that the copolymerization process was performed under the conditions shown in Table 1 below using the hybrid supported metallocene catalyst prepared in Preparation Example 2.

**Example 4: Preparation of ethylene/1-hexene copolymer**

An ethylene/1-hexene copolymer of Example 4 was prepared in the same manner as in Example 1, except that the copolymerization process was performed under the conditions shown in Table 1 below using the hybrid supported metallocene catalyst prepared in Preparation Example 3.

**Comparative Example 1**

An ethylene/1-hexene copolymer of Comparative Example 1 was prepared in the same manner as in Example 1, except that the copolymerization process was performed under the conditions shown in Table 1 below using the hybrid supported metallocene catalyst prepared in Comparative Preparation Example 1.

**Comparative Example 2**

An ethylene/1-hexene copolymer of Comparative Example 2 was prepared in the same manner as in Example 1, except that the copolymerization process was performed under the conditions shown in Table 2 below using the hybrid supported metallocene catalyst prepared in Comparative Preparation Example 2.

**Comparative Example 3**

An ethylene/1-hexene copolymer of Comparative Example 3 was prepared in the same manner as in Example 1, except that the copolymerization process was performed under the conditions shown in Table 2 below using the hybrid supported metallocene catalyst prepared in Comparative Preparation Example 3.

**Comparative Example 4**

A commercially available ethylene/1-octene (1-C8) copolymer (Dowlex2344, manufactured by Dow) prepared using a Ziegler-Natta (Z/N) catalyst in a uni-modal process with a single polymerization reactor was prepared as Comparative Example 4.

**Comparative Example 5**

A commercially available ethylene/1-hexene (1-C6) copolymer (XRT-70, manufactured by Total) prepared using a Ziegler-Natta (Z/N) catalyst in a bi-modal process with a dual polymerization reactor was prepared as Comparative Example 5.

**Comparative Example 6**

A commercially available ethylene/1-butene (1-C4) copolymer (Hostalen 4731B, manufactured by Basell) prepared using a Ziegler-Natta (Z/N) catalyst in a multi-modal process with a multi polymerization reactor was prepared as Comparative Example 6.

**Comparative Example 7**

An ethylene/1-hexene copolymer of Comparative Example 7 was prepared in the same manner as in Example 1, except that the copolymerization process was performed under the conditions shown in Table 3 below using the hybrid supported metallocene catalyst prepared in Comparative Preparation Example 4.

**Comparative Example 8**

An ethylene/1-hexene copolymer of Comparative Example 8 was prepared in the same manner as in Example 1, except that the copolymerization process was performed under the conditions shown in Table 3 below using the hybrid

supported metallocene catalyst prepared in Comparative Preparation Example 5.

**Comparative Example 9**

An ethylene/1-hexene copolymer of Comparative Example 9 was prepared in the same manner as in Example 1, except that the copolymerization process was performed under the conditions shown in Table 3 below using the hybrid supported metallocene catalyst prepared in Comparative Preparation Example 6.

**Comparative Example 10**

An ethylene/1-hexene copolymer of Comparative Example 10 was prepared in the same manner as in Example 1, except that the copolymerization process was performed under the conditions shown in Table 3 below using the hybrid supported metallocene catalyst prepared in Comparative Preparation Example 7.

**Comparative Example 11**

An ethylene/1-hexene copolymer of Comparative Example 11 was prepared in the same manner as in Example 1, except that the copolymerization process was performed under the conditions shown in Table 3 below using the hybrid supported metallocene catalyst prepared in Comparative Preparation Example 8.

**Test Example 1**

The physical properties of the ethylene/1-hexene copolymer, ethylene/1-butene copolymer or ethylene/1-octene copolymer according to Examples and Comparative Examples were measured in the following manner, and the results are shown in Tables 1 to 3.

**1) Density**

The density of the ethylene/1-hexene copolymer, ethylene/1-butene copolymer or ethylene/1-octene copolymer according to Examples and Comparative Examples was measured in accordance with ASTM D 1505.

**2) Melt index**

The melt index ($MI_{2.16}$) of the ethylene/1-hexene copolymer, ethylene/1-butene copolymer or ethylene/1-octene copolymer according to Examples and Comparative Examples was measured in accordance ASTM D 1238 (Condition E, 190 °C, load 2.16kg).

**3) High load melt index**

The high load melt index (HLMI, $MI_{21.6}$) of the ethylene/1-hexene copolymer, ethylene/1-butene copolymer or ethylene/1-octene copolymer according to Examples and Comparative Examples was measured in accordance ASTM D 1238 (Condition E, 190 °C, load 21.6kg).

**4) Melt flow rate ratio**

The melt flow rate ratio (MFRR, $MI_{21.6}/MI_{2.16}$) was obtained by dividing $MI_{21.6}$ (MI, load 21.6kg) by $MI_{2.16}$ (MI, load 2.16kg) using the melt index ($MI_{2.16}$) and the high load melt index ($MI_{21.6}$) measured above.

**5) Molecular weight distribution and GPC curve**

The molecular weight distribution (PDI, Mw/Mn) was calculated by measuring a weight average molecular weight (Mw) and a number average molecular weight (Mn) of the ethylene/1-hexene copolymer, ethylene/1-butene copolymer or ethylene/1-octene copolymer according to Examples and Comparative Examples using gel permeation chromatography (GPC, manufactured by Waters), and then dividing the weight average molecular weight by the number average molecular weight.

Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. Each sample of the ethylene/1-hexene copolymer, ethylene/1-butene copolymer or ethylene/1-octene copolymer according to Examples and Comparative Examples was pretreated by dissolving in 1,2,4-trichlorobenzene containing 0.0125% of BHT (2,6-bis(1,1-dimethylethyl)-4-methylphenol)) for 10 hours using a GPC analyzer (PL-GP220), and the sample with a concentration of 10 mg/10 mL was supplied in an amount of 200 μL. Mw and Mn were obtained using a calibration curve formed using a polystyrene standard. 9 kinds of the polystyrene standard were used with the weight average molecular weight of 2,980 g/mol, 9,960 g/mol, 19,920 g/mol, 70,500 g/mol, 217,000 g/mol, 597,500 g/mol, 1,956,000 g/mol, 3,507,0000 g/mol, and 6,570,000 g/mol.

In the log graph of the weight average molecular weight (Mw) of the ethylene/1-hexene copolymer, ethylene/1-butene copolymer or ethylene/1-octene copolymer according to Examples and Comparative Examples measured in this way, that is, in the GPC curve graph having an x-axis of log M and a y-axis of dw/dlogM, a ratio (%) of an integral value in the region where Log M is 6 or more to the total integral value was calculated and shown in Tables 1 to 3 below.

In addition, GPC curves (solid line, left Y-axis) of the ethylene/1-hexene copolymer, ethylene/1-butene copolymer or ethylene/1-octene copolymer according to Examples and Comparative Examples are shown in FIGs. 1 to 15, respectively.

**6) BOCD**

The BOCD was calculated based on the following Equation 1 through a molecular weight distribution curve obtained by plotting a log value (log M) of a weight average molecular weight (M) on the x-axis, and a molecular weight distribution (dwt/dlog M) with respect to the log value on the y-axis, and then measuring the SCB (Short Chain Branch) content (content of branches having 2 to 7 carbon atoms per 1,000 carbons, unit: branch/1,000C) at the left and right borders of centered 60% area excluding 20% of the left and right ends in the total area. In this regard, the SCB content at high molecular weight side and the SCB content at low molecular weight side mean SCB content values at the left and right borders of centered 60% area, respectively.

The sample was pretreated by dissolving it in 1,2,4-Trichlorobenzene containing 0.0125% of BHT at 160 °C for 10 hours using PL-SP260, and then the SCB content was measured at 160 °C using a PerkinElmer Spectrum 100 FT-IR connected to a high-temperature GPC (PL-GPC220).

[Equation 1]

$$\mathrm{BOCD} = \frac{(\text{SCB content at high molecular weight side} - \text{SCB content at low molecular weight side})}{(\log M \text{ at high molecular weight side} - \log M \text{ at low molecular weight side})}$$

If the BOCD is 0 or less, it can be considered that the polymer has no BOCD structure, and if the BOCD is more than 0, it can be considered that the polymer has the BOCD structure. It can be evaluated that as a polymer has the higher value, it has more excellent BOCD characteristics.

In addition, SCB content graphs (square dotted line, right Y-axis) of the ethylene/1-hexene copolymer, ethylene/1-butene copolymer or ethylene/1-octene copolymer according to Examples and Comparative Examples are shown in FIGs. 1 to 15, respectively.

**7) Melting temperature**

The melting point, that is, the melting temperature (Tm), of the ethylene/1-hexene copolymer, ethylene/1-butene copolymer or ethylene/1-octene copolymer according to Examples and Comparative Examples was measured using a differential scanning calorimeter (DSC, device name: Q20, manufacturer: TA Instruments).

Specifically, the temperature of the ethylene/1-hexene copolymer, ethylene/1-butene copolymer or ethylene/1-octene copolymer according to Examples and Comparative Examples was increased to 190 °C, and maintained at that temperature for 5 minutes. After that, the temperature was lowered to 50 °C, and further increased. The temperature at the top of the DSC (Differential Scanning Calorimeter, manufactured by TA) curve was referred to as the melting temperature (Tm). Herein, the temperature was increased and lowered at a rate of 10 °C/min, respectively, and the melting temperature (Tm) was confirmed at the second heating period.

**8) Tie molecule fraction**

With the data and melting point of the GPC curve measured as described above, a tie molecule fraction was calculated by the following Equation 5 according to the following method.

Specifically, the tie molecule fraction of the ethylene/1-hexene copolymer, ethylene/1-butene copolymer or ethylene/1-octene copolymer according to Examples and Comparative Examples can be measured through a tie molecule fraction distribution graph having an x-axis of log M and a y-axis of nPdM.

The tie molecule fraction distribution graph can be obtained from the data of a GPC curve graph having an x-axis of log M and a y-axis of dw/dlogM and DSC measurement results. In the above, M refers to the average molecular weight, and w refers to the weight fraction. Specifically, the log M of the x-axis in the tie molecule fraction distribution graph is the same as the x-axis of the GPC curve graph. In addition, nPdM of the y-axis in the tie molecule fraction distribution graph can be calculated from data obtained from the GPC curve graph. In the nPdM, n is the number of polymers having a molecular weight of M, which can be obtained as (dw/dlog M)/M from the GPC curve data. P is the probability that a tie molecule is generated and can be calculated from Equation 2 below, and dM is dlogM<x-axis data of GPC curve, X n+1> - dlogM<x-axis data of GPC curve, Xn>.

[Equation 2]

$$P=\frac{1}{3}\frac{\int_{2l_c+l_a}^{\infty} r^2 \exp\left(-b^2r^2\right)dr}{\int_0^{\infty} r^2 \exp\left(-b^2r^2\right)dr}$$

in Equation 2,

- r is an end-to-end distance of a random coil,
- $b^2$ is $3/2<r>^2$,
- $l_c$ is a crystal thickness, and
- $l_a$ is an amorphous layer thickness.

In Equation 2, $l_c$ can be calculated from Equation 3 below, wherein Tm is the melting temperature of polyethylene.

[Equation 3]

$$T_m = T^{\circ}_m\left(1-\frac{2\sigma_e}{\Delta h_m l_c}\right)$$

in Equation 3,

$T_m^0$ is 415K, $\sigma_e$ is $60.9\times10^{-3}Jm^{-2}$, and $\Delta h_m$ is $2.88\times10^{3}Jm^{-3}$.

Further, in Equation 2, $l_a$ can be calculated from Equation 4 below.

[Equation 4]

$$l_a = \rho_c l_c(1-\omega^c)/\rho_a\omega^c$$

in Equation 4,

- $\rho_c$ is a density of a crystalline phase and is 1000 $kg/m^3$,
- $\rho_a$ is a density of an amorphous phase and is 852 $kg/m^3$, and
- $\omega^c$ is a weight fraction crystallinity and can be measured with DSC.

The tie molecule fraction ($\overline{P}$) can be derived from the following Equation 5 with the value of P obtained from the Equation 2.

[Equation 5]

$$\overline{P} = \frac{\int_0^\infty nPdM}{\int_0^\infty ndM}$$

in Equation 5,

nPdM is as described above in relation to Equation 2, and
P is the value obtained in the Equation 2.

**9) Characteristic Stress (C.S)**

The characteristic stress (C.S.) was measured by a tensile test of stress-strain in accordance with ASTM D 638.
Specifically, after obtaining a stress-strain curve by a tensile test under the following test conditions, yield stress and drawig stress were plotted according to a strain rate, and extrapolation was performed with the low strain rate. And, a value when the yield stress and the drawing stress are the same was measured as the characteristic stress.

Test: D638
Specimen: D638, Type IV
Srain rate: 0.1, 0.05, 0.01, 0.005 mm/mm s
Yield Stress: Stress at yield point
Drawing Stress: Stress at strain 100% (Dutile deformation)
x-axis: ln(strain rate)
y-axis: Stress.

**10) Sagging time**

2L Bloma (Blow Molders Accumulator, manufacturer BLOMA ENGINEERING CO., device name: 2L Blow Molding M/C, die head) as shown in FIG. 16 can be used. Herein, 2L means a container volume that can be manufactured by blow molding. A specific example thereof is as shown in the schematic diagram of FIG. 16. For example, the injection device may be equipped with an air hose, a die head, a molten pastic, an extruder, a blow pin, a cooling line, a mold cavity, a parison, or a mold half.
At this time, the injection device was operated under the conditions of extruder temperarure 210 °C, screw PRM 12, die size 45 mm, and thickness 1.8 mm. Then, the sagging time was obtained by flowing the ethylene/1-hexene copolymer molten in the extruder from top to bottom in a direction parallel to gravity (see F1 of FIG. 16), and then measuring the time taken for the molten ethylene/1-hexene copolymer to descend 1 m from top to bottom (see F2 of FIG. 16) in seconds (sec) in the Parison installed in a direction parallel to gravity as the sagging time.

**11) Resistance to internal pressure**

The resistance to internal pressure (MPa) was measured by the ISO 9080 method.

**12) Strain hardening modulus**

The strain hardening modulus (<Gp>, MPa) of the ethylene/1-hexene copolymer, ethylene/1-butene copolymer or ethylene/1-octene copolymer according to Examples and Comparative Examples was measured in accordance with 18488 (2015(E)) in order to evaluate the resistance to ethylene copolymers (thickness of the specimen = 2 mm).
Specifically, a strain/stress curve of the ethylene/1-hexene copolymer, ethylene/1-butene copolymer or ethylene/1-octene copolymer according to Examples and Comparative Examples was measured under the conditions of 80

°C and 20 mm/min in accordance with ISO 18488 to obtain a Neo-Hookean constitutive model curve (x-axis: $\lambda^2 - \frac{1}{\lambda}$, y-axis: $\sigma_{true}$). Then, a slope of a linear fitting value between the true strain 8 and 12 in the Hookean constitutive model curve was measured and expressed as the strain hardening modulus.

**13) NPT**

Ethylene/1-hexene copolymers used as pressure-resistant heating pipes or large-diameter high-pressure pipes are required to have long-term stability under high-pressure conditions. In order to evaluate the long-term stability, a notch pipe test (NPT) was performed on the ethylene/1-hexene copolymer, ethylene/1-butene copolymer, or ethylene/1-octene copolymer according to Examples and Comparative Examples by Korea Conformity Laboratories (KCL) in accordance with ISO 13479, and the measurement results were shown in hours (hr).

The physical properties of the ethylene/1-hexene copolymer, ethylene/1-butene copolymer, or ethylene/1-octene copolymer according to Examples and Comparative Examples measured above are shown in Tables 1 to 3 shown below. In addition, a GPC curve (solid line, left Y-axis) and a SCB content graph (square dotted line, right Y-axis) of the copolymers prepared in Examples and Comparative Examples are shown in FIGs. 1 to 15, respectively.

Meanwhile, In Tables 1 to 3 below, catalytic activity (kgPE/gCat.hr) was obtained by measuring the weight of the catalyst (gCat) used in the polymerization reaction of Examples and Comparative Examples and the weight of the ethylene copolymer (kgPE) prepared from the polymerization reaction, and then calculating a ratio of the weight of the prepared ethylene to the weight of the used catalyst.

[Table 1]

| | Example 1 | Example 2 | Example 3 | Example 4 | Comparativ e Example 1 |
|---|---|---|---|---|---|
| Catalyst (precursor molar ratio) | metallocen e catalyst (precursor (1):(2)=1:5) | metallocen e catalyst (precursor (1):(2)=1:5) | metallocen e catalyst (precursor (1):(2)=1:3) | metallocen e catalyst (precursor (1):(2)=1:7) | metallocen e catalyst (precursor (1):(3) =1:5) |
| Ethylene input (kg/hr) | 33.5 | 32.5 | 32.8 | 33.0 | 33.3 |
| Comonomer type | 1-Hexene (1-C6) | 1-Hexene (1-C6) | 1-Hexene (1-C6) | 1-Hexene (1-C6) | 1-Hexene (1-C6) |
| Comonomer input to ethylene (wt%) | 5 | 4.5 | 4.8 | 3.2 | 3 |
| Hydrogen input (ppm) | 120 | 110 | 100 | 150 | 200 |
| Polymerization temperature (°C) | 93 | 93 | 93 | 93 | 93 |
| Catalytic activity (kgPE/g Cat.hr) | 9 | 8.5 | 10 | 9.5 | 12 |
| Density (g/cm$^3$) | 0.9469 | 0.9472 | 0.9470 | 0.9471 | 0.9452 |
| $MI_{2.16}$ (g/ 10min) | 0.16 | 0.16 | 0.16 | 0.18 | 0.13 |
| HLMI (g/10min) | 14.42 | 14.46 | 14.37 | 15.99 | 6.99 |
| MFRR | 90.1 | 91.5 | 89.8 | 88.8 | 52.2 |
| PDI (Mw/Mn) | 10.5 | 11.4 | 10.2 | 11.8 | 11.8 |

(continued)

| | Example 1 | Example 2 | Example 3 | Example 4 | Comparativ e Example 1 |
|---|---|---|---|---|---|
| Mw (×1000 g/mol) | 179 | 189 | 190 | 157 | 170 |
| GPC (≥logMw 6, Area%) | 3.07 | 3.23 | 3.3 | 3.03 | 1.95 |
| BOCD | 1.62 | 1.42 | 1.04 | 1.24 | 0.51 |
| Melting temperature (Tm, °C) | 132.5 | 131.7 | 131.4 | 131.4 | 130.1 |
| Tie Molecule fraction (%) | 6.12 | 6.14 | 6.16 | 6.05 | 5.58 |
| C.S. (MPa) | 13.9 | 13.6 | 14.0 | 13.5 | 13.5 |
| Sagging time (sec) | 106 | 106 | 108 | 101 | 100 |
| Resistance to internal pressure (MPa) | 10.1 | 10.0 | 10.1 | 10.0 | 10.0 |
| $<G_P>$ (MPa) | 23.6 | 23.3 | 23.9 | 23.2 | 22.3 |
| NPT (hr) | 2470 | 1940 | 2350 | 1700 | 530 |

[Table 2]

| | Comparativ e Example 2 | Comparativ e Example 3 | Comparativ e Example 4 | Comparativ e Example 5 | Comparativ e Example 6 |
|---|---|---|---|---|---|
| Catalyst (precursor molar ratio) | metallocen e catalyst (precursor (1):(4)=1:8) | metallocen e catalyst (precursor (1):(2)=1:1.2) | Z/N catalyst | Z/N catalyst | Z/N catalyst |
| Ethylene input (kg/hr) | 33.0 | 33.3 | - | - | - |
| Comonomer type | 1-Hexene (1-C6) | 1-Hexene (1-C6) | 1-Octene (1-C8) | 1-Hexene (1-C6) | 1-Butene (1-C4) |
| Comonomer input to ethylene (wt%) | 2 | 6.7 | - | - | - |
| Hydrogen input (ppm) | 230 | 50 | - | - | - |
| Polymerization temperature (°C) | 93 | 93 | - | - | - |
| Catalytic activity (kgPE/g Cat.hr) | 3.7 | 5.5 | - | - | - |
| Density (g/cm$^3$) | 0.9480 | 0.9410 | 0.9320 | 0.9480 | 0.9480 |
| MI2.16 (g/10min) | 0.19 | 0.67 | 0.68 | 0.15 | 0.12 |
| HLMI (g/10min) | 9.93 | 22.20 | 17.69 | 14.39 | 9.55 |
| MFRR | 51.7 | 33.1 | 25.9 | 97.9 | 83.1 |

(continued)

| | Comparativ e Example 2 | Comparativ e Example 3 | Comparativ e Example 4 | Comparativ e Example 5 | Comparativ e Example 6 |
|---|---|---|---|---|---|
| PDI (Mw/Mn) | 11.5 | 4.3 | 3.4 | 13.4 | 13.6 |
| Mw (×1000 g/mol) | 185 | 149 | 124 | 179 | 207 |
| GPC (≥logMw 6, Area%) | 2.72 | 1.29 | 0.53 | 3.78 | 4.3 |
| BOCD | 0.56 | 2.6 | -0.5 | 3.09 | 3.69 |
| Melting temperature (Tm, °C) | 130.2 | 129.8 | 125.9 | 132.3 | 132.1 |
| Tie Molecule fraction (%) | 5.62 | 9.10 | 9.50 | 7.90 | 8.70 |
| C.S. (MPa) | 13.7 | 12.6 | 11.7 | 15.2 | 14.9 |
| Sagging time (sec) | 102 | 62 | 57 | 108 | 112 |
| Resistance to internal pressure (MPa) | 10.0 | 9.7 | 9.2 | 10.2 | 10.2 |
| <GP> (MPa) | 20.6 | 23 | 23.2 | 22.1 | 21 |
| NPT (hr) | 200 | 1250 | 1300 | 1280 | 710 |

[Table 3]

| | Comparativ e Example 7 | Comparativ e Example 8 | Comparativ e Example 9 | Comparativ e Example 10 | Comparativ e Example 11 |
|---|---|---|---|---|---|
| Catalyst (precursor molar ratio) | metallocen e catalyst (precursor (1):(3) =1:7) | metallocen e catalyst (precursor (5):(2) =1:10 ) | metallocen e catalyst (precursor (1):(2) =1:9) | metallocen e catalyst (precursor (5):(2) =1:5) | metallocen e catalyst (precursor (1):(6) =1:5) |
| Ethylene input (kg/hr) | 32.7 | 33.0 | 33.1 | 33.1 | 32.9 |
| Comonomer type | 1-Hexene (1-C6) | 1-Hexene (1-C6) | 1-Hexene (1-C6) | 1-Hexene (1-C6) | 1-Hexene (1-C6) |
| Comonomer input to ethylene (wt%) | 0.8 | 1.4 | 1.8 | 0.6 | 1.15 |
| Hydrogen input (ppm) | 130 | 195 | 190 | 195 | 158 |
| Polymerization temperature (°C) | 93 | 93 | 93 | 93 | 93 |
| Catalytic activity (kgPE/g Cat.hr) | 7.5 | 5.1 | 10.6 | 9 | 9.7 |
| Density (g/cm$^3$) | 0.9444 | 0.9471 | 0.9440 | 0.9476 | 0.9443 |
| MI2.16 (g/ 10min) | 0.084 | 0.16 | 0.20 | 0.14 | 0.16 |

(continued)

| | Comparativ e Example 7 | Comparativ e Example 8 | Comparativ e Example 9 | Comparativ e Example 10 | Comparativ e Example 11 |
|---|---|---|---|---|---|
| HLMI (g/10min) | 5.43 | 13.43 | 13.00 | 7.15 | 11.04 |
| MFRR | 64.6 | 84.5 | 66.5 | 53.0 | 70.3 |
| PDI (Mw/Mn) | 9.6 | 12.7 | 15.0 | 12.2 | 10.6 |
| Mw (×1000 g/mol) | 190 | 188 | 156 | 187 | 174 |
| GPC (≥logMw 6, Area%) | 2.96 | 2.81 | 2.68 | 2.78 | 2.67 |
| BOCD | 1.41 | 1.01 | 2.28 | 0.67 | 0.88 |
| Melting temperature (Tm, °C) | 130.3 | 131.2 | 130.2 | 131.5 | 130.0 |
| Tie Molecule fraction (%) | 5.81 | 6.12 | 5.70 | 5.81 | 5.62 |
| C.S. (MPa) | 11.9 | 12.6 | 12.4 | 12.5 | 11.8 |
| Sagging time (sec) | 120 | 105 | 99 | 106 | 101 |
| Resistance to internal pressure (MPa) | 9.5 | 9.7 | 9.6 | 9.7 | 9.5 |
| <GP> (MPa) | 22.9 | 22.7 | 22.8 | 21.8 | 22.8 |
| NPT (hr) | 1000 | 1360 | 900 | 850 | 950 |

As shown in Table 1 to Table 3, it was confirmed that the ethylene/1-hexene copolymers of Examles 1 to 4 according to present disclosure could have improved long-term stability and processability as well as excellent pipe resistance to internal pressure, 10 MPa or more of MRS required for large-diameter polyethylene pipes, by increasing the middle and high molecular weight regions to increase the tie molecule fraction and the entanglement of polymer chains.

Further, as shown in FIG. 1 to FIG. 4, it was confirmed that the ethylene/1-hexene copolymers of Examles 1 to 4 according to present disclosure had the optimized molecular weight distribution compared to Comparative Examples, and a structure in which comonomers are incorporated predominantly in high-molecular-weight main chains, that is, a structure in which the SCB (short chain branch) content increases as the molecular weight increases along with the increased tie molecule fraction by increasing the middle and high molecular weight regions.

However, it was confirmed that the ethylene/1-hexene copolymers of Comparative Examples 1 to 11 exhibited deterioration in physical properties of the ethylene copolymer, and had poor pipe resistance to internal pressure, long-term stability, or processability, because the molecular weight distribution, and the ratio of the middle and high molecular weight regions and the low molecular weight region in the molecule were not optimized. In particular, in FIGs. 5 to 6 related to the ethylene/1-hexene copolymers of Comparative Examples 1 to 2, the BOCD structure and the optimized molecular weight distribution could not be simultaneously implemented. In FIG. 7 related to the ethylene/1-hexene copolymer of Comparative Example 3, although it had the BOCD structure, the physical properties were deteriorated due to the narrow molecular weight distribution. In FIG. 8 related to the ethylene/1-octene copolymer of Comparative Example 4, 1-octene (1-C8) comonomer was used, but there was a problem in that the BOCD structure was not shown and the sagging time was too short due to the narrow molecular weight distribution. In FIG. 9 related to the ethylene/1-hexene copolymer of Comparative Example 5, although the NPT was improved as the BOCD structure appeared and the molecular weight distribution increased, the NPT properties were significantly inferior than those of Examples. In FIG. 10 related to the ethylene/1-butene copolymer of Comparative Example 6, the molecular structure was excellent, but the 1-butene (1-C4) comonomer was used, resulting in only 710 hours of NPT. In FIGs. 11 to 13 related to the ethylene/1-hexene copolymers of Comparative Examples 7 to 9, although they had the BOCD structure as described above, the ratio of the middle and high molecular weight regions was reduced, and the pressure resistance and NPT properties were significantly deteriorated. In FIG. 14 related to the ethylene/1-hexene copolymer of Comparative Example

10, both the molecular weight distribution and the BOCD structure were not optimized, resulting in a significant drop in NPT to 850 hours. In FIG. 15 related to the ethylene/1-hexene copolymer of Comparative Example 11, the BOCD structure was not shown, so that the sagging time was greatly shortened even though the molecular weight distribution was optimized, and the pressure resistance and NPT properties were also poor.

## Claims

**1.** An ethylene/1-hexene copolymer satisfying the following conditions:

a molecular weight distribution (Mw/Mn) is 8 to 12,
a broad orthogonal co-monomer distribution (BOCD) is 1 to 2,
an integral value in a region where Log M is 6 or more in a gel permeation chromatography (GPC) curve graph having an x-axis of log M and a y-axis of dw/dlogM is 3.0% or more of a total integral value, wherein the log M is a a log value of a weight average molecular weight, and the dwt/dlog M is a molecular weight distribution, and
a tie molecule fraction is 6.0% or more.

**2.** The ethylene/1-hexene copolymer of Claim 1, wherein the molecular weight distribution (Mw/Mn) is 10 to 11.8.

**3.** The ethylene/1-hexene copolymer of Claim 1, wherein the broad orthogonal co-monomer distribution (BOCD) is 1.04 to 1.8.

**4.** The ethylene/1-hexene copolymer of Claim 1, wherein the integral value in the region where Log M is 6 or more in a GPC curve graph having an x-axis of log M and a y-axis of dw/dlogM is 3.03% or more of the total integral value.

**5.** The ethylene/1-hexene copolymer of Claim 1, wherein the tie molecule fraction is 6.05% or more.

**6.** The ethylene/1-hexene copolymer of Claim 1, which has a density measured according to ASTM D 1505 of 0.945 $g/cm^3$ to 0.955 $g/cm^3$.

**7.** The ethylene/1-hexene copolymer of Claim 1, which has a melt index ($MI_{2.16}$) measured at 190 °C under a load of 2.16 kg according to ASTM D 1238 of 0.05 g/10min to 0.25 g/10min.

**8.** The ethylene/1-hexene copolymer of Claim 1, which has a high-load melt index (HLMI, $MI_{21.6}$) measured at 190 °C under a load of 21.6 kg according to ASTM D 1238 of 10 g/10 min to 18 g/10 min.

**9.** The ethylene/1-hexene copolymer of Claim 1, which has a melt flow rate ratio ($MI_{21.6}/MI_{2.16}$) measured at 190 °C according to ASTM D 1238 of 85 to 120.

**10.** The ethylene/1-hexene copolymer of Claim 1, which has a characteristic stress measured according to ASTM D 638 of 13 MPa to 14.5 MPa.

**11.** The ethylene/1-hexene copolymer of Claim 1, which has a resistance to internal pressure measured according to ISO 9080 of 10 MPa to 12 MPa.

**12.** The ethylene/1-hexene copolymer of Claim 1, which has a strain hardening modulus, which is a slope of a linear fitting value between a true strain 8 and 12 in a Hookean constitutive model curve after measuring a strain/stress curve under 80 °C and 20 mm/min in accordance with ISO 18488 to obtain a Neo-Hookean constitutive model curve having a x-axis of $\lambda^2 - \frac{1}{\lambda}$, and a y-axis of $\sigma_{true}$, of 23 MPa to 25 MPa.

**13.** The ethylene/1-hexene copolymer of Claim 1, which has a notch pipe test (NPT) result according to ISO 13479 of 1500 to 4000 hours.

**14.** The ethylene/1-hexene copolymer of Claim 1, wherein a 1-hexene content in the ethylene/1-hexene copolymer is 3.0 wt% to 7.0 wt% based on a total weight of the ethylene/1-hexene copolymer.

**15.** A method for preparing the ethylene/1-hexene copolymer according to Claim 1, comprising copolymerizing ethylene and 1-hexene in a mono-modal polymerization process in the presence of a catalyst composition comprising a first metallocene compound represented by Chemical Formula 1 and a second metallocene compound represented by Chemical Formula 2 while introducing hydrogen gas,
wherein the first metallocene compound and the second metallocene compound are included in a molar ratio of 1:2 to 1:8:

[Chemical Formula 1] $(Cp^1R^a)_n(Cp^2R^b)M^1Z^1_{3-n}$

in Chemical Formula 1,

$M^1$ is a Group 4 transition metal;
each of $Cp^1$ and $Cp^2$ is cyclopentadienyl unsubstituted or substituted with $C_{1-20}$ hydrocarbon;
$R^a$ and $R^b$ are the same as or different from each other, and are each independently hydrogen, $C_{1-20}$ alkyl, $C_{1-20}$ alkoxy, $C_{2-20}$ alkoxyalkyl, $C_{6-20}$ aryl, $C_{6-20}$ aryloxy, $C_{2-20}$ alkenyl, $C_{7-40}$ alkylaryl, $C_{7-40}$ arylalkyl, $C_{8-40}$ arylalkenyl, $C_{2-20}$ alkynyl, or substituted or unsubstituted $C_{2-20}$ heteroaryl containing at least one heteroatom selected from the group consisting of N, O and S, provided that at least one of $R^a$ and $R^b$ is not hydrogen;
$Z^1$ are each independently halogen, $C_{1-20}$ alkyl, $C_{2-20}$ alkenyl, $C_{7-40}$ alkylaryl, $C_{7-40}$ arylalkyl, $C_{6-20}$ aryl, substituted or unsubstituted $C_{1-20}$ alkylidene, substituted or unsubstituted amino, $C_{2-20}$ alkylalkoxy, or $C_{7-40}$ arylalkoxy; and
n is 1 or 0;

[Chemical Formula 2]

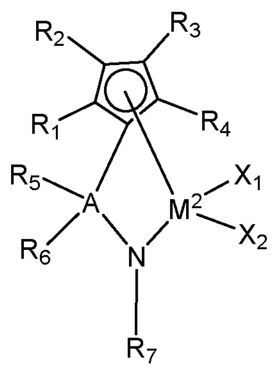

in Chemical Formula 2,

$M^2$ is a Group 4 transition metal;
A is carbon, silicon, or germanium;
$X^1$ and $X^2$ are the same as or different from each other, and are each independently halogen, or $C_{1-20}$ alkyl;
$R_1$ to $R_4$ are the same as or different from each other, and are each independently hydrogen, $C_{1-20}$ alkyl, $C_{2-20}$ alkenyl, $C_{6-20}$ aryl, $C_{7-20}$ alkylaryl, or $C_{7-20}$ arylalkyl, or two or more substituents adjacent to each other of $R_1$ to $R_4$ are connected with each other to form a substituted or unsubstituted aliphatic ring, a substituted or unsubstituted aromatic ring, or a substituted or unsubstituted heteroaromatic ring containing at least one selected from the group consisting of N, O and S;
$R_5$ and $R_6$ are the same as or different from each other, and are each independently $C_{1-20}$ alkyl, $C_{2-20}$ alkenyl, $C_{6-30}$ aryl, or $C_{2-20}$ alkoxyalkyl; and
$R_7$ is $C_{1-20}$ alkyl, $C_{2-20}$ alkenyl, or $C_{6-30}$ aryl.

**16.** The method for preparing the ethylene/1-hexene copolymer of Claim 15, wherein the first metallocene compound is represented by any one of the following structural formulae:

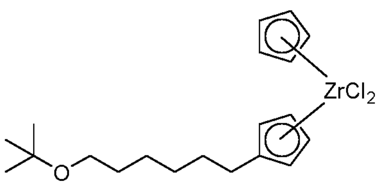 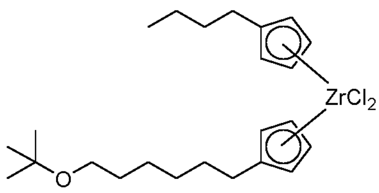 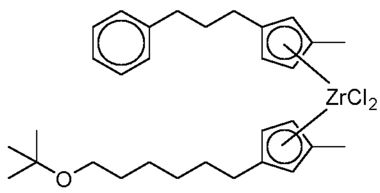

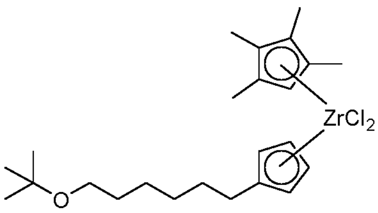 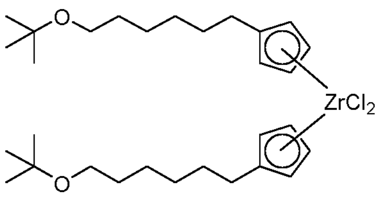 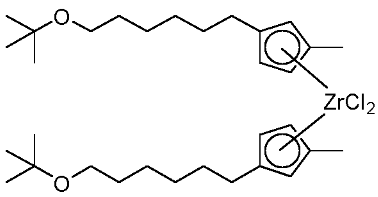.

**17.** The method for preparing the ethylene/1-hexene copolymer of Claim 15, wherein the second metallocene compound is represented by any one of the following structural formulae:

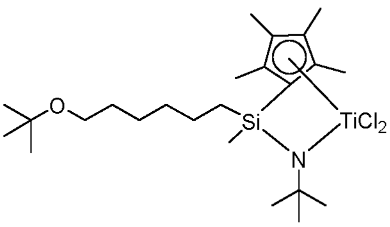 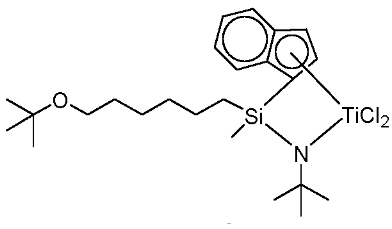 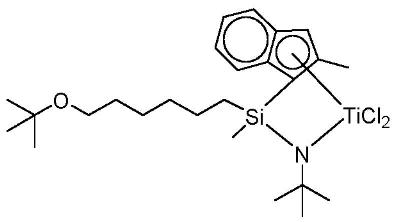

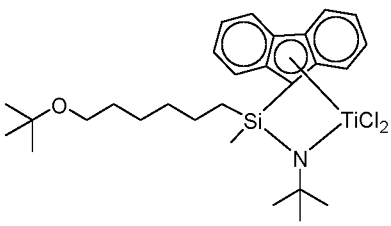 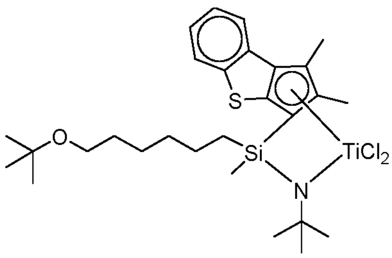

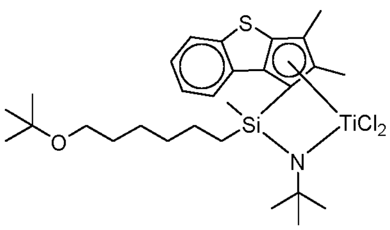 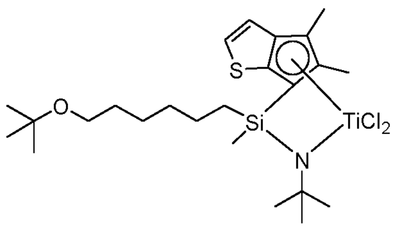 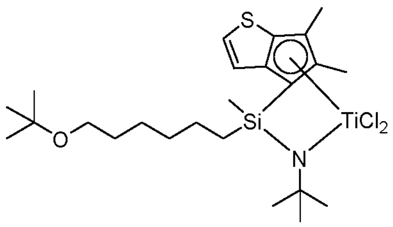.

**18.** The method for preparing the ethylene/1-hexene copolymer of Claim 15, wherein the copolymerization is performed by a mono-modal polymerization method in a single loop slurry reactor.

**19.** The method for preparing the ethylene/1-hexene copolymer of Claim 15, wherein the 1-hexene is included in an amount of 4.0 wt% to 6.0 wt% based on a total weight of the ethylene in the copolymerization process.

**20.** A pipe comprising the ethylene/1-hexene copolymer according to any one of Claims 1 to 14.

【FIG. 1】

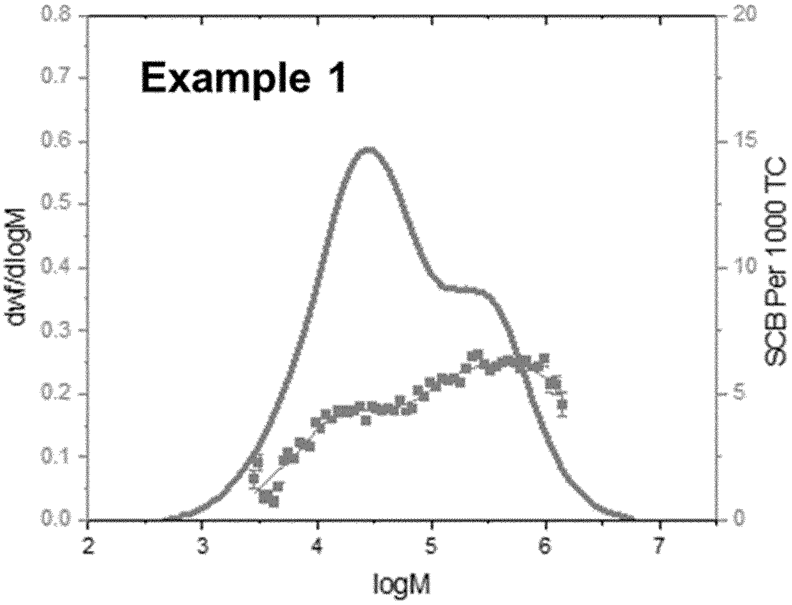
Example 1
dwf/dlogM
SCB Per 1000 TC
logM
0.0
0.1
0.2
0.3
0.4
0.5
0.6
0.7
0.8
0
5
10
15
20
2
3
4
5
6
7

【FIG. 2】

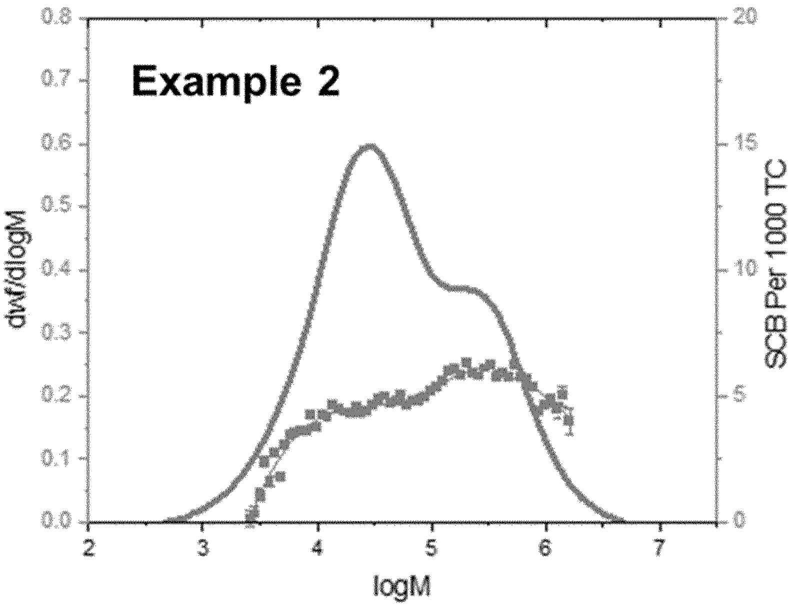
Example 2
dwf/dlogM
SCB Per 1000 TC
logM
0.0
0.1
0.2
0.3
0.4
0.5
0.6
0.7
0.8
0
5
10
15
20
2
3
4
5
6
7

【FIG. 3】

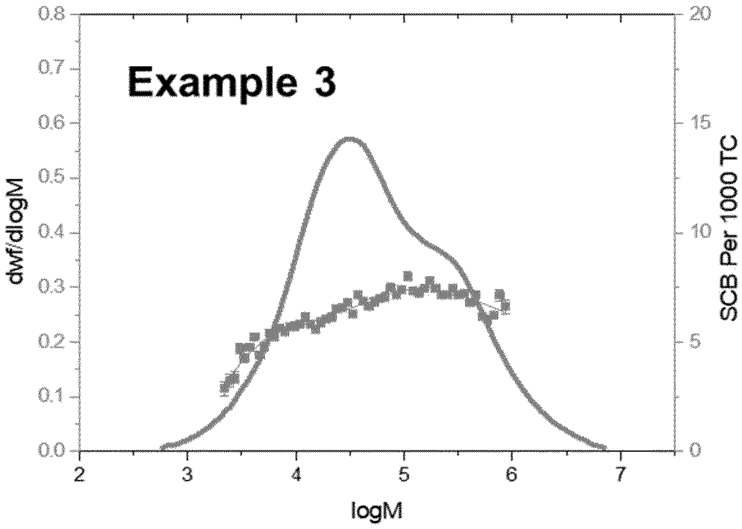
Example 3
dwf/dlogM
SCB Per 1000 TC
logM
0.0
0.1
0.2
0.3
0.4
0.5
0.6
0.7
0.8
0
5
10
15
20
2
3
4
5
6
7

【FIG. 4】

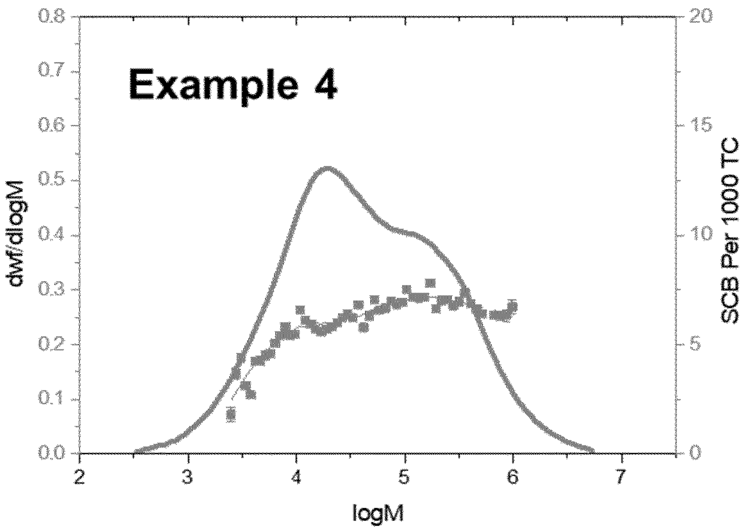
Example 4
dwf/dlogM
SCB Per 1000 TC
logM
0.0
0.1
0.2
0.3
0.4
0.5
0.6
0.7
0.8
0
5
10
15
20
2
3
4
5
6
7

【FIG. 5】

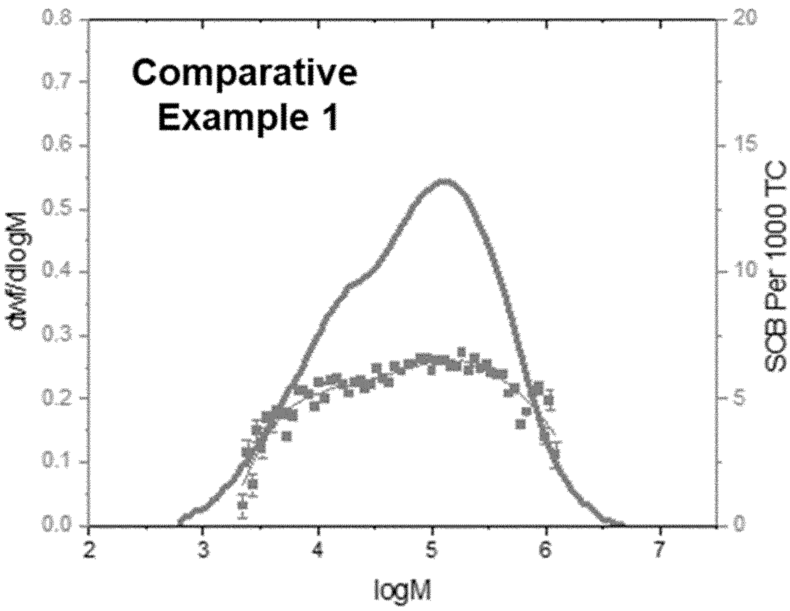
Comparative
Example 1
dwf/dlogM
SCB Per 1000 TC
logM
0.8
0.7
0.6
0.5
0.4
0.3
0.2
0.1
0.0
20
15
10
5
0
2
3
4
5
6
7

【FIG. 6】

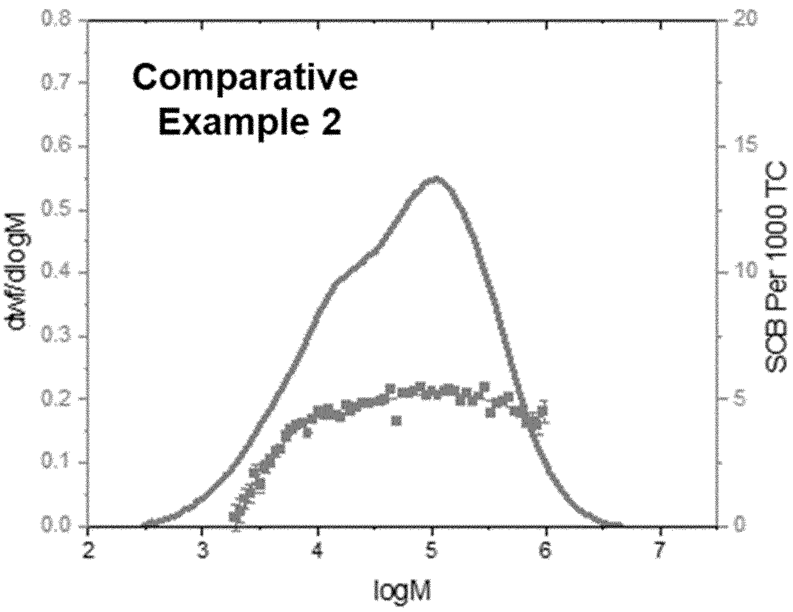
Comparative
Example 2
dwf/dlogM
SCB Per 1000 TC
logM
0.8
0.7
0.6
0.5
0.4
0.3
0.2
0.1
0.0
20
15
10
5
0
2
3
4
5
6
7

【FIG. 7】

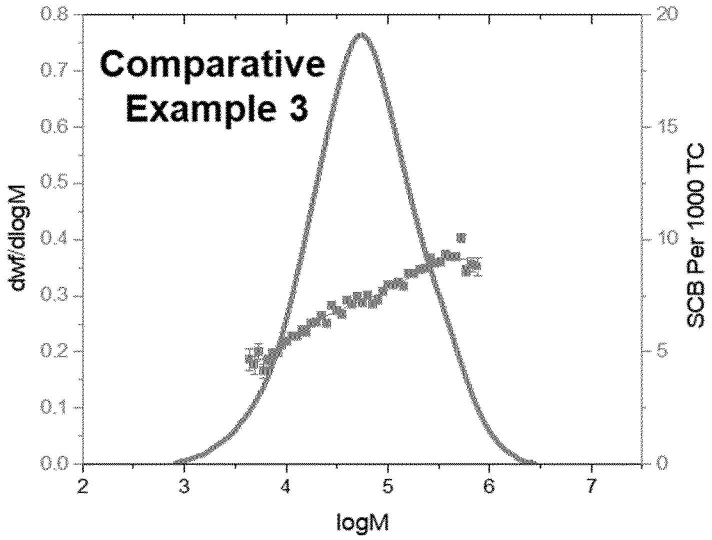
Comparative
Example 3
dwf/dlogM
SCB Per 1000 TC
logM
0.0
0.1
0.2
0.3
0.4
0.5
0.6
0.7
0.8
0
5
10
15
20
2
3
4
5
6
7

【FIG. 8】

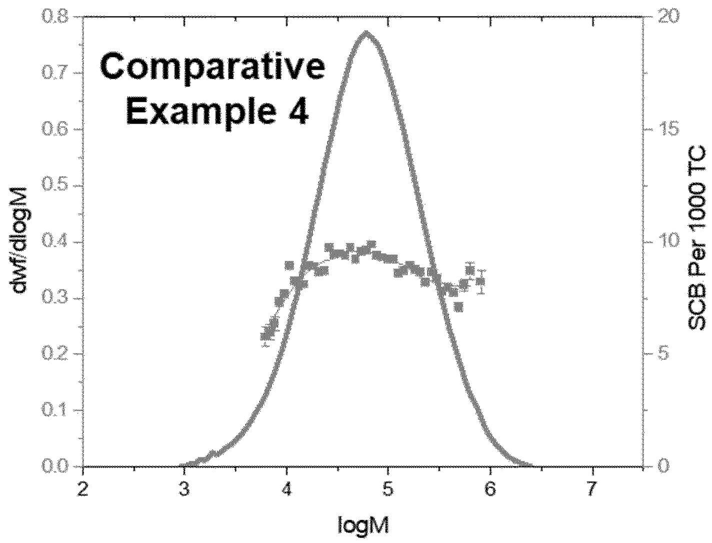
Comparative
Example 4
dwf/dlogM
SCB Per 1000 TC
logM
0.0
0.1
0.2
0.3
0.4
0.5
0.6
0.7
0.8
0
5
10
15
20
2
3
4
5
6
7

【FIG. 9】

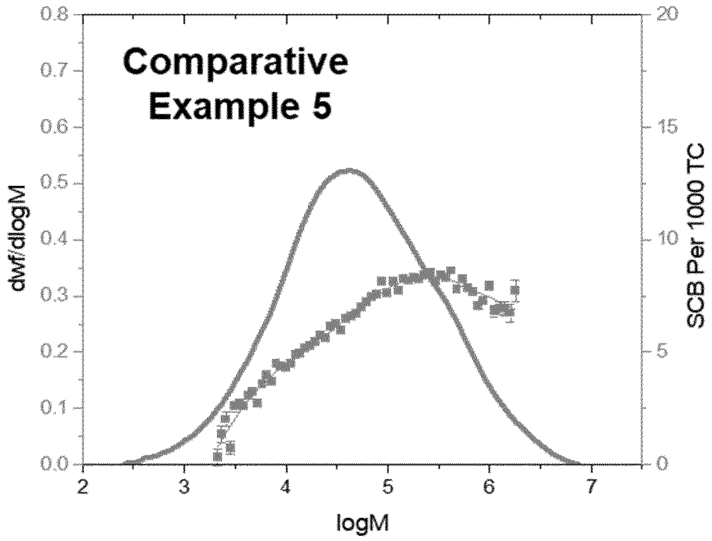
Comparative Example 5
dwf/dlogM
SCB Per 1000 TC
logM
0.0
0.1
0.2
0.3
0.4
0.5
0.6
0.7
0.8
0
5
10
15
20
2
3
4
5
6
7

【FIG. 10】

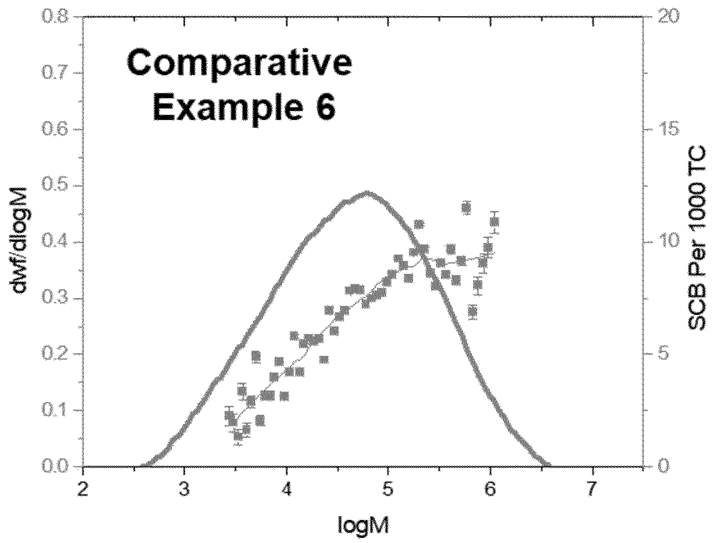
Comparative Example 6
dwf/dlogM
SCB Per 1000 TC
logM
0.0
0.1
0.2
0.3
0.4
0.5
0.6
0.7
0.8
0
5
10
15
20
2
3
4
5
6
7

【FIG. 11】

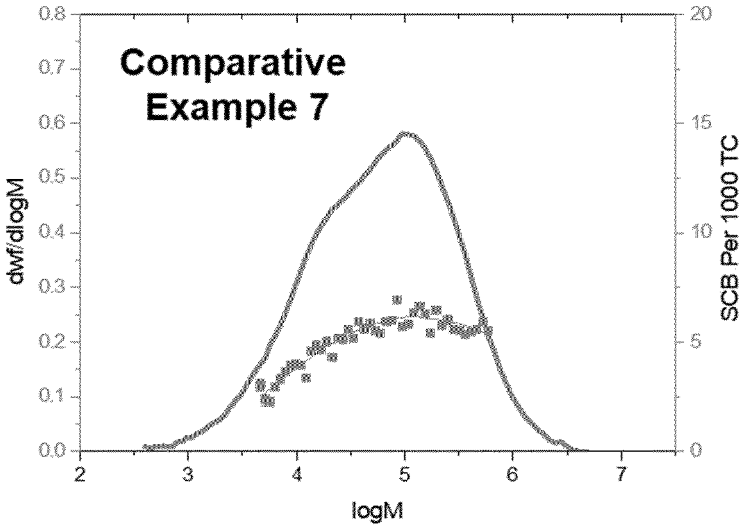
Comparative
Example 7
dwf/dlogM
SCB Per 1000 TC
logM
0.0
0.1
0.2
0.3
0.4
0.5
0.6
0.7
0.8
0
5
10
15
20
2
3
4
5
6
7

【FIG. 12】

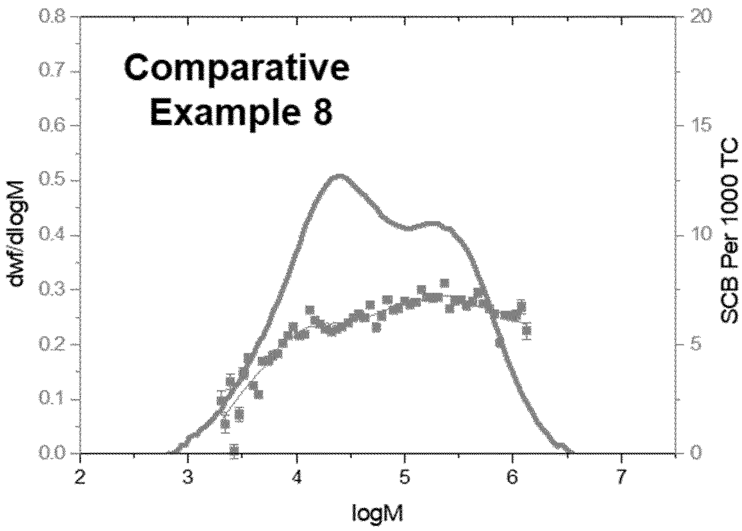
Comparative
Example 8
dwf/dlogM
SCB Per 1000 TC
logM
0.0
0.1
0.2
0.3
0.4
0.5
0.6
0.7
0.8
0
5
10
15
20
2
3
4
5
6
7

【FIG. 13】

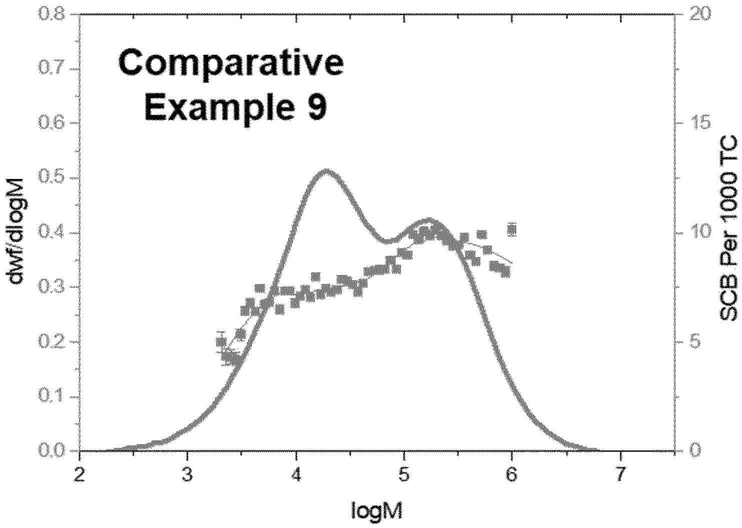
Comparative Example 9
dwf/dlogM
SCB Per 1000 TC
logM
0.8
0.7
0.6
0.5
0.4
0.3
0.2
0.1
0.0
20
15
10
5
0
2
3
4
5
6
7

【FIG. 14】

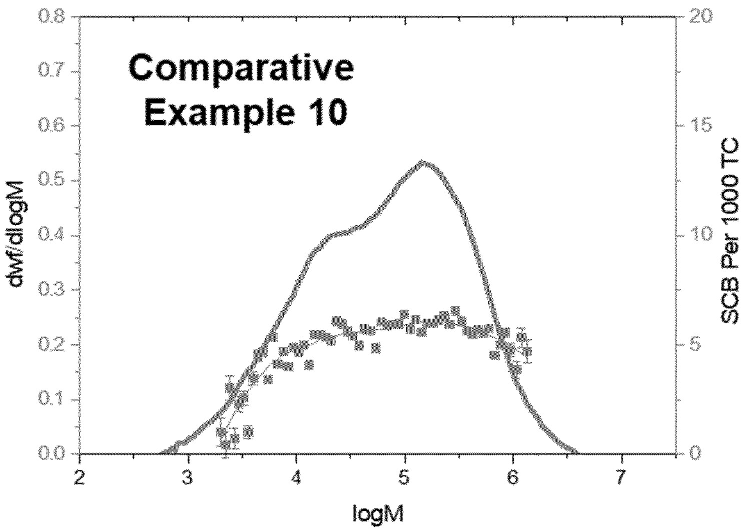
Comparative Example 10
dwf/dlogM
SCB Per 1000 TC
logM
0.8
0.7
0.6
0.5
0.4
0.3
0.2
0.1
0.0
20
15
10
5
0
2
3
4
5
6
7

【FIG. 15】

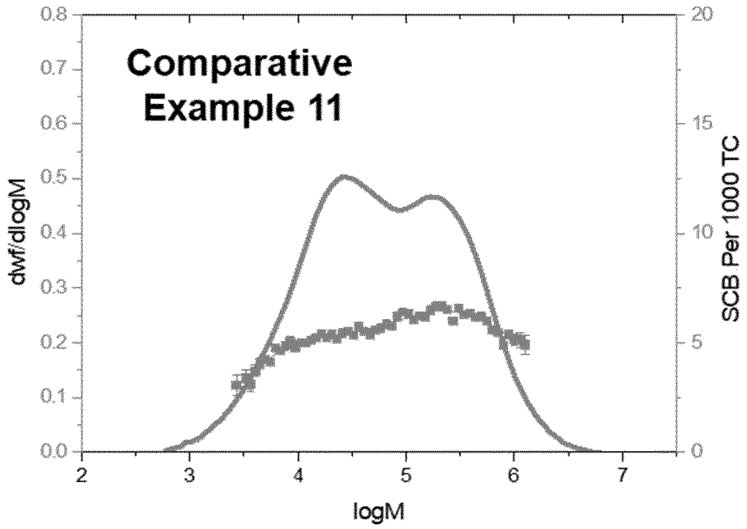
Comparative Example 11
dwf/dlogM
SCB Per 1000 TC
logM
0.0
0.1
0.2
0.3
0.4
0.5
0.6
0.7
0.8
0
5
10
15
20
2
3
4
5
6
7

【FIG. 16】

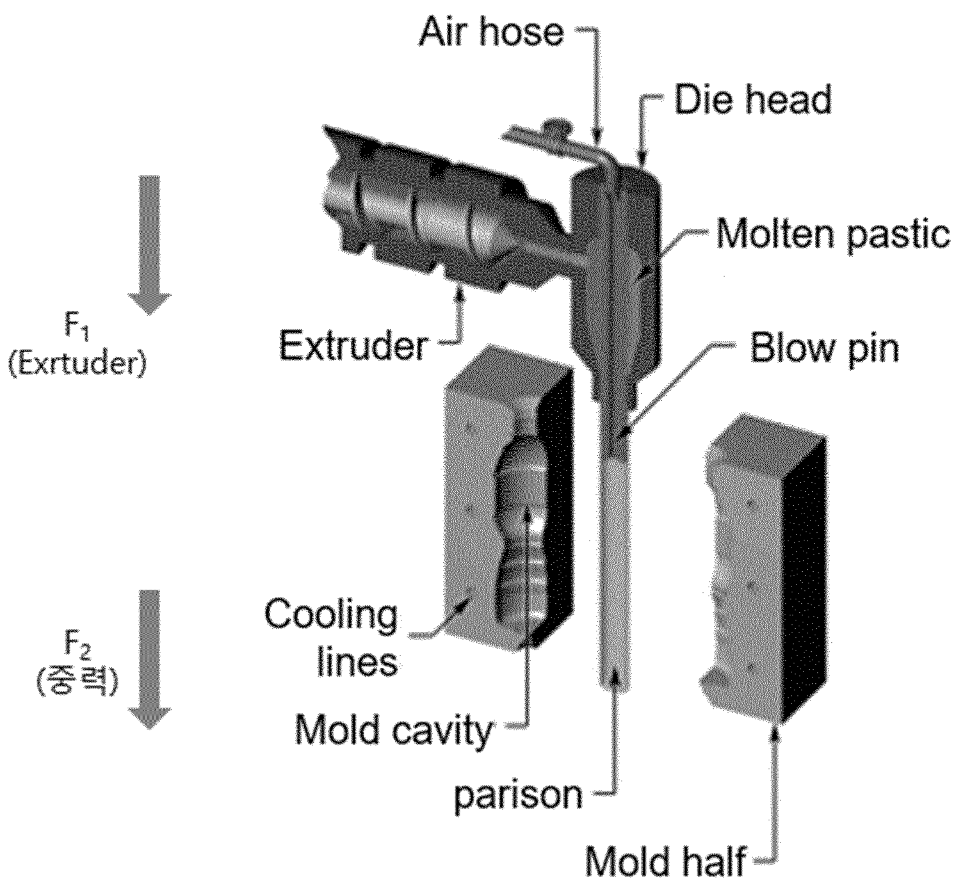
Air hose
Die head
Molten pastic
Extruder
Blow pin
$F_1$ (Exrtuder)
$F_2$ (중력)
Cooling lines
Mold cavity
parison
Mold half

## INTERNATIONAL SEARCH REPORT

International application No.
**PCT/KR2023/003056**

**A. CLASSIFICATION OF SUBJECT MATTER**

**C08F 210/16**(2006.01)i; **C08F 210/14**(2006.01)i; **C08F 4/659**(2006.01)i; **C08F 4/6592**(2006.01)i; **C08L 23/08**(2006.01)i

According to International Patent Classification (IPC) or to both national classification and IPC

**B. FIELDS SEARCHED**

Minimum documentation searched (classification system followed by classification symbols)

C08F 210/16(2006.01); B29B 11/14(2006.01); C08F 110/02(2006.01); C08F 2/00(2006.01); C08F 2/01(2006.01); C08F 210/14(2006.01); C08L 23/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 에틸렌/1-헥센 공중합체(ethylene/1-hexene copolymer), 파이프(pipe), 메탈로센 화합물(metallocene compound), 몰비(mole ratio)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0038357 A (LG CHEM, LTD.) 07 April 2021 (2021-04-07) See claims 1, 9 and 14-17; and paragraphs [0074]-[0076], [0079], [0238], [0248], [0251], [0252], [0256], [0287] and [0288]. | 1-20 |
| A | KR 10-2022-0022862 A (LG CHEM, LTD.) 28 February 2022 (2022-02-28) See claims 1-15. | 1-20 |
| A | KR 10-2019-0079381 A (LG CHEM, LTD.) 05 July 2019 (2019-07-05) See entire document. | 1-20 |
| A | WO 2016-172099 A1 (EXXONMOBIL CHEMICAL PATENTS INC.) 27 October 2016 (2016-10-27) See entire document. | 1-20 |
| A | HONG, S. C. et al. Immobilized Me2Si(C5Me4)(N-tBu) TiCl2/(nBuCp)2ZrCl2 hybrid metallocene catalyst system for the production of poly(ethylene-co-hexene) with pseudo-bimodal molecular weight and inverse comonomer distribution. Polymer engineering & science. 2007, vol. 47, no. 2, pp. 131-139. See entire document. | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 June 2023** | **07 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/003056**

| Patent document cited in search report | Publication date (day/month/year) | Patent family member(s) | Publication date (day/month/year) |
|---|---|---|---|
| KR 10-2021-0038357 A | 07 April 2021 | CN 113166322 A | 23 July 2021 |
| | | EP 3872102 A1 | 01 September 2021 |
| | | EP 3872102 A4 | 26 January 2022 |
| | | JP 2022-507058 A | 18 January 2022 |
| | | JP 7134553 B2 | 12 September 2022 |
| | | KR 10-2526767 B1 | 27 April 2023 |
| | | US 2022-0017667 A1 | 20 January 2022 |
| | | WO 2021-066437 A1 | 08 April 2021 |
| KR 10-2022-0022862 A | 28 February 2022 | CN 114929798 A | 19 August 2022 |
| | | EP 4063451 A1 | 28 September 2022 |
| | | JP 2023-504843 A | 07 February 2023 |
| | | US 2023-0096686 A1 | 30 March 2023 |
| | | WO 2022-039425 A1 | 24 February 2022 |
| KR 10-2019-0079381 A | 05 July 2019 | KR 10-2395103 B1 | 04 May 2022 |
| WO 2016-172099 A1 | 27 October 2016 | CN 107148446 A | 08 September 2017 |
| | | CN 107148446 B | 16 June 2020 |
| | | CN 107207807 A | 26 September 2017 |
| | | CN 107207807 B | 16 June 2020 |
| | | CN 107250250 A | 13 October 2017 |
| | | CN 107250250 B | 29 December 2020 |
| | | CN 107636028 A | 26 January 2018 |
| | | CN 107636029 A | 26 January 2018 |
| | | CN 107636029 B | 22 May 2020 |
| | | CN 107667123 A | 06 February 2018 |
| | | CN 107667123 B | 01 September 2020 |
| | | CN 109312015 A | 05 February 2019 |
| | | CN 109312015 B | 26 October 2021 |
| | | CN 110845801 A | 28 February 2020 |
| | | CN 110845801 B | 03 January 2023 |
| | | CN 114685703 A | 01 July 2022 |
| | | EP 3245252 A1 | 22 November 2017 |
| | | EP 3245252 B1 | 13 October 2021 |
| | | EP 3245253 A1 | 22 November 2017 |
| | | EP 3245253 B1 | 04 December 2019 |
| | | EP 3245254 A1 | 22 November 2017 |
| | | EP 3245254 B1 | 03 April 2019 |
| | | EP 3274380 A1 | 31 January 2018 |
| | | EP 3274380 B1 | 19 August 2020 |
| | | EP 3274381 A1 | 31 January 2018 |
| | | EP 3274381 B1 | 15 May 2019 |
| | | EP 3286231 A1 | 28 February 2018 |
| | | EP 3286231 B1 | 09 October 2019 |
| | | EP 3452521 A1 | 13 March 2019 |
| | | JP 2018-504512 A | 15 February 2018 |
| | | JP 2018-506619 A | 08 March 2018 |
| | | JP 2018-507928 A | 22 March 2018 |
| | | JP 6509349 B2 | 08 May 2019 |
| | | JP 6689862 B2 | 28 April 2020 |
| | | JP 6788609 B2 | 25 November 2020 |
| | | KR 10-1918882 B1 | 14 November 2018 |

Form PCT/ISA/210 (patent family annex) (July 2022)

**INTERNATIONAL SEARCH REPORT**
**Information on patent family members**

International application No.
**PCT/KR2023/003056**

| Patent document cited in search report | Publication date (day/month/year) | Patent family member(s) | Publication date (day/month/year) |
|---|---|---|---|
| | | KR 10-1973880 B1 | 29 April 2019 |
| | | KR 10-1989719 B1 | 14 June 2019 |
| | | KR 10-2017-0097126 A | 25 August 2017 |
| | | KR 10-2017-0097696 A | 28 August 2017 |
| | | KR 10-2017-0097697 A | 28 August 2017 |
| | | US 10253173 B2 | 09 April 2019 |
| | | US 10385198 B2 | 20 August 2019 |
| | | US 10457801 B2 | 29 October 2019 |
| | | US 10538656 B2 | 21 January 2020 |
| | | US 10618989 B2 | 14 April 2020 |
| | | US 10640583 B2 | 05 May 2020 |
| | | US 10717790 B2 | 21 July 2020 |
| | | US 2016-0244535 A1 | 25 August 2016 |
| | | US 2017-0362350 A1 | 21 December 2017 |
| | | US 2018-0002516 A1 | 04 January 2018 |
| | | US 2018-0002517 A1 | 04 January 2018 |
| | | US 2018-0072823 A1 | 15 March 2018 |
| | | US 2018-0134828 A1 | 17 May 2018 |
| | | US 2018-0171040 A1 | 21 June 2018 |
| | | US 2019-0169413 A1 | 06 June 2019 |
| | | US 9796795 B2 | 24 October 2017 |
| | | WO 2016-114914 A1 | 21 July 2016 |
| | | WO 2016-114915 A1 | 21 July 2016 |
| | | WO 2016-114916 A1 | 21 July 2016 |
| | | WO 2016-171807 A1 | 27 October 2016 |
| | | WO 2016-171808 A1 | 27 October 2016 |
| | | WO 2017-192226 A1 | 09 November 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220030266
- KR 1020230028702


### Non-patent literature cited in the description


- *Tetrahedron Lett.,* 1988, vol. 2951